# EUROPEAN PATENT SPECIFICATION

(11) **EP 4 149 138 B1**
(45) Date of publication and mention of the grant of the patent: **18.03.2026**
(21) Application number: 21195883.0
(22) Date of filing: 10.09.2021
(51) Int. Cl.: H04W 12/08, H04L 9/40

(54) **METHOD FOR OPERATING A USER EQUIPMENT WITHIN OR AS PART OF A TELECOMMUNICATIONS NETWORK, USER EQUIPMENT, SYSTEM OR TELECOMMUNICATIONS NETWORK, SESSION ACCESS CONTROL FUNCTION OR FUNCTIONALITY, PROGRAM AND COMPUTER PROGRAM PRODUCT**
VERFAHREN ZUM BETRIEB EINER BENUTZERAUSRÜSTUNG INNERHALB ODER ALS TEIL EINES TELEKOMMUNIKATIONSNETZWERKS, BENUTZERGERÄT, SYSTEM ODER TELEKOMMUNIKATIONSNETZWERK, SITZUNGSZUGANGSKONTROLLFUNKTION ODER -FUNKTIONALITÄT, PROGRAMM UND COMPUTERPROGRAMMPRODUKT
PROCÉDÉ DE FONCTIONNEMENT D'UN ÉQUIPEMENT UTILISATEUR DANS OU EN TANT QUE PARTIE D'UN RÉSEAU DE TÉLÉCOMMUNICATIONS, ÉQUIPEMENT UTILISATEUR, SYSTÈME OU RÉSEAU DE TÉLÉCOMMUNICATIONS, FONCTION OU FONCTIONNALITÉ DE CONTRÔLE D'ACCÈS À UNE SESSION, PROGRAMME ET PRODUIT PROGRAMME INFORMATIQUE

(43) Date of publication of application: 15.03.2023
(73) Proprietor: Deutsche Telekom AG, 53113 Bonn (DE)
(72) Inventor: COLOM IKUNO, Josep, 2100 Korneuburg (AT); GLUDOVACZ, Dieter, 2521 Trumau (AT)
(74) Representative: Schwöbel, Thilo K.

(56) References cited:
- WO-A2-2020/163760
- US-A1- 2017 257 791
- QUALCOMM INCORPORATED: "Considerations on Per-Application Authorization", no. Online; 20210818 - 20210828, 17 August 2021 (2021-08-17), XP052064308, Retrieved from the Internet <URL:https://ftp.3gpp.org/tsg_sa/WG4_CODEC/TSGS4_115-e/Docs/S4-211080.zip S4-211080_CR_Authorization.docx> [retrieved on 20210817]
- CHINA TELECOM: "Discussion on supporting authentication and authorization for each application in the same network slice", vol. SA WG2, no. e-meeting; 20210517 - 20210528, 10 May 2021 (2021-05-10), XP052004916, Retrieved from the Internet <URL:https://ftp.3gpp.org/tsg_sa/WG2_Arch/TSGS2_145E_Electronic_2021-05/Docs/S2-2104619.zip> [retrieved on 20210510]
- "3rd Generation Partnership Project; Technical Specification Group Services and System Aspects; Study on 5G media streaming extensions (Release 17)", 27 August 2021 (2021-08-27), XP052064468, Retrieved from the Internet <URL:https://ftp.3gpp.org/tsg_sa/WG4_CODEC/TSGS4_115-e/Docs/S4-211240.zip> [retrieved on 20210827]

## Description

### BACKGROUND

The present invention relates a method for operating a user equipment within or as part of a telecommunications network, wherein the operation of the user equipment involves the operation of an application or an application layer functionality of the user equipment, wherein the operation of the application or of the application layer functionality of the user equipment requires at least one data transmission session to be established between the user equipment and the core network such that downlink data packets are able to be transmitted from or via the core network to the user equipment and uplink data packets are able to be transmitted from the user equipment to or via the core network in order for the application or the application layer functionality to exchange payload data with or to be connected to the core network and/or the data network, using the at least one data transmission session.

Furthermore, the present invention relates to a user equipment for being operated within or as part of a telecommunications network, wherein the operation of the user equipment involves the operation of an application or an application layer functionality of the user equipment, wherein the operation of the application or of the application layer functionality of the user equipment requires at least one data transmission session to be established between the user equipment and the core network such that downlink data packets are able to be transmitted from or via the core network to the user equipment and uplink data packets are able to be transmitted from the user equipment to or via the core network in order for the application or the application layer functionality to exchange payload data with or to be connected to the core network and/or the data network, using the at least one data transmission session.

Additionally, the present invention relates to a system or telecommunications network for operating a user equipment within or as part of the telecommunications network, wherein the operation of the user equipment involves the operation of an application or an application layer functionality of the user equipment, wherein the operation of the application or of the application layer functionality of the user equipment requires at least one data transmission session to be established between the user equipment and the core network such that downlink data packets are able to be transmitted from or via the core network to the user equipment and uplink data packets are able to be transmitted from the user equipment to or via the core network in order for the application or the application layer functionality to exchange payload data with or to be connected to the core network and/or the data network, using the at least one data transmission session

Additionally, the present invention relates to an session access control function or functionality of a system or telecommunications network according to the present invention.

Furthermore, the present invention relates to a program and to a computer-readable medium according to the inventive method for operating a user equipment within or as part of the telecommunications network.

In conventionally known telecommunications networks, there is typically a differentiation between an access network (also denoted by AN in the context of the present invention), and a core network (also denoted by CN in the context of the present invention). A user equipment is part of such telecommunications networks or connected thereto. Especially with mobile communication networks, the access network is a radio access network. In case of a mobile communication network, the user equipment communicates with the radio access network via a radio interface, which is used for conveying both signaling information and (payload) data traffic. Even if there is a logical separation (e.g. in the form of logical channels such as the N1/N2 vs. the N3 interfaces in case of a telecommunications network according to the 5G standard), both types of data end up being transmitted over the same physical medium. An analogous situation (of conveying both signaling information and (payload) data traffic over the same physical medium, e.g. a digital subscriber line) also applies in case of fixed-line telecommunications networks. However, in many circumstances, what is aimed at is that the user equipment is connected to a data network; this requires a data transmission session, e.g. in the form of a PDU session in case of a telecommunications network according to the 5G standard.

A data transmission session (or PDU session) is a logical data transport channel terminated at the core network that provides connectivity to a data network; the data transmission session (or PDU session) typically has a termination point, e.g. a user plane function (UPF) in case of a telecommunications network according to the 5G standard, that is also termed data transmission session anchor (or PDU session anchor). While a user equipment moves (e.g. by means of realizing handover operations within a mobile communication network, especially a radio access network), the data transmission session anchor is expected to remain constant (hence the term "anchor").

Presently, different applications (or application layer functionalities) realized in or by a user equipment are typically able to interact with the telecommunications network or parts or entities thereof or parts or entities connected thereto, such as, typically, the data network. However, the possibilities or capabilities of such applications (e.g. regarding which access is available to which service and under which conditions, and how are corresponding payload data are transmitted) conventionally depend on the subscription of the user equipment, and neither access control (i.e. authorization) and authentication methods nor application-specific downlink or uplink application (data) flows are available on a per-application granularity basis. There are ways to authenticate registration (of the user equipment) to a network, to a specific slice, and to a given PDU session, but not within a PDU session. Related prior art is disclosed in 3GPP draft S2-2104619 titled "Discussion on supporting authentication and authorization for each application in the same network slice" and in 3GPP draft S4-211240, titled "3rd Generation Partnership Project; Technical Specification Group Services and System Aspects; Study on 5G media streaming extensions (Release 17) " as well as in patent application publications WO 2020/163760 A2 and US 2017/257791 A1.

### SUMMARY

An object of the present invention is to provide a technically simple, effective and cost effective solution for operating a user equipment within or as part of a telecommunications network, wherein the operation of the user equipment involves the operation of an application or an application layer functionality of the user equipment, and wherein downlink or uplink data packets, directed or related to the application or the application layer functionality are able to form application-specific application flows. A further object of the present invention is to provide a corresponding user equipment, system or mobile communication network, session access control function or functionality, and a corresponding program and computer-readable medium.

The appended independent claims define the scope of protection of present invention. An embodiment of present disclosure is related to a method for operating a user equipment within or as part of a telecommunications network, wherein the operation of the user equipment involves the operation of an application or an application layer functionality of the user equipment,
wherein the telecommunications network comprises or is associated or assigned to an access network and to a core network, wherein the core network provides the user equipment with data connectivity towards a data network,
wherein the operation of the application or of the application layer functionality of the user equipment requires at least one data transmission session to be established between the user equipment and the core network such that downlink data packets are able to be transmitted from or via the core network to the user equipment and uplink data packets are able to be transmitted from the user equipment to or via the core network,
wherein, in order for downlink data packets, directed or related to the application or the application layer functionality, being able to form an application-specific downlink application flow, and uplink data packets, originating from the application or the application layer functionality, being able to form an application-specific uplink application flow, the method comprises the following steps:
   -- in a first step, at least one piece of application-specific identifier information is assigned to the application or the application layer functionality,
   -- in a second step, the application or the application layer functionality is operated using the at least one data transmission session, wherein the data transmission session transports both the downlink data packets and the uplink data packets and at least part of the at least one piece of application-specific identifier information.

It is thereby advantageously possible according to the present invention that by means of assigning at least one piece of application-specific identifier information to the application or the application layer functionality and by means of using the at least one data transmission session to transport both the downlink data packets and the uplink data packets and at least part of the at least one piece of application-specific identifier information, it is possible for the application or the application layer functionality to exchange downlink and/or uplink payload data (or data packets) with or to be connected to the core network and/or the data network, using the (at least one) data transmission session, in an application-specific manner.

Connected to this, it is advantageously possible to provide differentiated services related to how and where such services are deployed in the telecommunications network, e.g. edge services, low-latency services, specific features, etc., and who has access to which services, i.e. which services are allowed for a given subscription (of a user equipment) and/or for which applications or application layer functionalities under which conditions.

Conventionally, the scope of a mobile network (or, more generalized, of a telecommunications network) comprises of is composed of the user equipment, the access network, the core network, and one or a plurality of data networks. Conventionally, it is implied that data transmission sessions are able to be used, and also different quality-of-service flows realized within, but that there is, conventionally, no way to use application-specific identifier information to mark or label application-specific downlink or uplink application flows. Furthermore conventionally, it is implied that access, service and subscription information relate to a user equipment subscription, and that there is, conventionally, no way to use access control/authorization and authentication methods on a per-application granularity basis. There are typically ways to authenticate registration to a network, to a specific slice, and to the establishment of a given PDU session, but not within a PDU session.

The telecommunications network typically comprises an access network and a core network. However, the present invention is also related to situations where the telecommunications network does not comprise, strictly speaking, both an access network and a core network, but where the telecommunications network is only associated or assigned to an access network (and especially comprises the core network), or where the telecommunications network is only associated or assigned to a core network (and especially comprise the access network), or where the telecommunications network is only associated or assigned to both an access network and a core network. According to the present invention, the core network especially provides the user equipment with data connectivity towards a data network, hence the core network, at least partly, realizes 5G functionality.

According to the present invention, it is advantageously possible, e.g., to charge and to handle (e.g. to transmit applying different quality-of-service levels) in an application specific manner, especially application-specific traffic based on application flows, to limit access to specific network slices to certain applications, and, more generally speaking, to be able to control the access to data connectivity on a per-application basis instead of (or additionally to) on a per-subscriber basis. Hence according to the present invention, it is advantageously possible that network operators have the possibility to handle data flows and offer connectivity not (only) to specific subscribers (e.g. a physical customer or a user equipment), but rather to applications, i.e. in an application-specific manner. This means that which services a given user equipment is able to access is not only dictated by the subscription data of that given user equipment (or to which this user equipment is related to) but rather by the "application subscription data" (i.e. by means of the application or the application layer functionality requesting and the application authorization function or functionality providing access to the data transmission session).

In order to establish a data connection enabling the user equipment (or any user equipment) to communicate with a data network, a data transmission session (especially a PDU session) is required. A data transmission session (or PDU session) is a logical data transport channel, typically terminated at the core network, that provides connectivity to a data network. The termination point of a given data transmission session (or PDU session) - typically a user plane function in the context of a 5G telecommunications network) - is termed data transmission session anchor (or PDU session anchor, PSA, especially in 5G). While a user equipment moves (e.g. in case of handover), the data transmission session anchor is expected to remain rather constant. A data transmission session (or PDU session) is established between the user equipment and the core network as follows, i.e. according to the following processing steps:
The user equipment sends a session establishment request (i.e. a corresponding message) to the core network; the data transmission session is established by the core network; the core network sends a data transmission session establishment accept (i.e. a corresponding message) to the user equipment; as a result of these processing steps, the user equipment, and especially an application or an application layer functionality within or as part of the user equipment, is able to send data traffic to the data network (accessible by or via the core network) and/or to receive data traffic from the data network, using the data transmission session or PDU session.

According to the present invention, the at least one data transmission session (to be established between the user equipment and the core network) typically transports downlink data packets and/or uplink data packets, but normally both downlink data packets (from or via the core network to the user equipment) and uplink data packets (from the user equipment to or via the core network), wherein such downlink data packets that are directed or related to the application or the application layer functionality form an application-specific downlink application flow, and such uplink data packets that are related to or originating from the application or the application layer functionality form an application-specific uplink application flow.

According to the present invention, at least one piece of application-specific identifier information is assigned to the application or the application layer functionality. It is thereby advantageously possible to differentiate (by means of the at least one piece of application-specific identifier information) such data packets that are assigned to the application or the application layer functionality from data packets that are not.

It is especially advantageously possible, according to the present invention, that the downlink application flow (of data packets) is able to be labelled or marked (by a core network component, entity or functionality) and/or that the uplink application flow (of data packets) is able to be labelled or marked (by a user equipment component or functionality) by means of the (or a part of the) at least one piece or application-specific identifier information.

According to the present invention, it is furthermore advantageously possible and preferred that the user equipment comprises a session access control function or functionality, wherein the session access control function or functionality triggers the downlink data packets (of the downlink application flow related to the application or the application layer functionality) and/or the uplink data packets (of the uplink application flow related to the application or the application layer functionality) to be marked or labelled using at least part of the at least one piece of application-specific identifier information. This serves to be able to easily and comparatively effortless differentiate, within the data transmission session or the PDU session (or as part thereof), all the data packets of or belonging to the uplink application flow (i.e. associated or assigned to the considered application or application layer functionality) and/or all the data packets of or belonging to the downlink application flow (i.e. associated or assigned to the considered application or application layer functionality). The identifier information (of the at least one piece of application-specific identifier information) that is specifically assigned and used for the uplink application flow might be the same or might differ from the one used for the downlink application flow.

According to the present invention, it is furthermore advantageously possible and preferred that the user equipment comprises or is assigned to or is able to access an application authorization function or functionality, wherein the application authorization function or functionality authorizes the application or the application layer functionality to access the considered data transmission session or a plurality of considered data transmission sessions (i.e. the least one data transmission session).

It is thereby advantageously possible to provide or to grant, to the considered application or application layer functionality, access to the considered data transmission session/ PDU session or data transmission sessions/PDU sessions - or to deny this access. Hence according to such an embodiment of the present invention, the application or application layer functionality is required to request to access or to use (for its data traffic or payload data to be transmitted to and from the data network) a or the considered data transmission session (by means of transmitting an application access request message to the application authorization function or functionality). Only in case that this request is granted (by means of an application access grant message transmitted to (and received by) the application or the application layer functionality), the application or application layer functionality is able (or allowed) to access the data transmission session, and this grant could also be denied by the application authorization function or functionality (in case that the application access request message is determined, by the application authorization function or functionality, to be invalid).

Especially, the session access control function or functionality not only triggers the downlink data packets and the uplink data packets to be marked or labelled but additionally also polices or executes the decision of the application authorization function or functionality, especially the decision regarding authorization of the application or the application layer functionality to access the at least one data transmission session.

According to the present invention, it is furthermore advantageously possible and preferred that the operation of the user equipment furthermore involves the operation (besides the application or the application layer functionality) of a further application or a further application layer functionality (of the user equipment) that is also using the at least one data transmission session (established between the user equipment and the core network). In such a situation according to the present invention - in order for the further application or the further application layer functionality to exchange payload data with or to be connected to the core network and/or the data network, using the at least one data transmission session - an at least one piece of application-specific further identifier information is assigned to the further application or further application layer functionality, and the further application or the further application layer functionality is operated using the at least one data transmission session, and the data transmission session transports both (respective) further downlink data packets (that are directed or related to the further application or the further application layer functionality and being able to form an application-specific further downlink application flow) and (respective) further uplink data packets (being related or originating from the further application or the further application layer functionality and being able to form an application-specific further uplink application flow) and at least part of the at least one piece of application-specific further identifier information.

Furthermore, it is especially preferred that the session access control function or functionality triggers the downlink data packets (of the further downlink application flow related to the further application or the further application layer functionality) and/or the uplink data packets (of the further uplink application flow related to the further application or the further application layer functionality) to be marked or labelled using (at least part of) the at least one piece of application-specific further identifier information. Again, this serves to be able to easily and comparatively effortless differentiate the data packets of the different application flows associated to either the application (or application layer functionality) or the further application (or further application layer functionality).

It is furthermore advantageously possible and preferred that the at least one piece of application-specific identifier information relates to two or more applications or application layer functionalities, and especially to a group of applications or application layer functionalities.

Thereby, it is advantageously possible to differentiate, in the data transmission session, the corresponding uplink and/or downlink application flows related to such two or more applications or application layer functionalities and/or to a group of applications or application layer functionalities from other applications or application layer functionalities.

Furthermore, it is advantageously possible and preferred according to the present invention that the at least one piece of application-specific identifier information relates to or is used with regard to more than one data transmission session,
and/or
wherein application-specific identifier information is included with the downlink and uplink data packets within the data transmission session by the user equipment, the access network and/or the core network, wherein especially uplink and downlink data packets include a different piece of application-specific identifier information, and/or
wherein end-marker packets, containing at least one piece of application-specific identifier information, are introduced in the data transmission session by the user equipment, the access network and/or the core network, wherein especially the end-marker packets indicate that subsequent packets belong to a specific application or application group flow, wherein especially the case that the end-marker packets in the uplink and downlink contain a different piece of application-specific identifier information.

By means of the at least one piece of application-specific identifier information relating to or being used with regard to more than one data transmission session advantageously provides the possibility to use the same piece of application-specific identifier information for different data transmission sessions or PDU sessions, resulting in an easier handling of such different pieces of identifier information.

By means of including the application-specific identifier information with or in the downlink and uplink data packets - especially in a header part of such data packets -, it is advantageously possible to provide for an integrated handling of the payload part of such data packets and the identifier information associated thereto; especially and advantageously, different identifier information is able to be used for uplink versus downlink data packets in order to be able to differentiate the direction of such data streams (being related to the same application or application layer functionality, or group thereof).

Furthermore, by means of using end-marker packets (containing at least one piece of application-specific identifier information) it is advantageously possible to label or to mark data packets, as part of the data transmission session, without necessarily integrating the identifier information in these data packets or without modifying the structure or format of such data packets; especially the end-marker packets indicate that subsequent (i.e. subsequently transmitted) data packets belong to a specific application or application group flow. Again especially and advantageously, different identifier information is able to be used, in the end-marker packets, for uplink versus downlink (payload) data packets in order to be able to differentiate the direction of such data streams (being related to the same application or application layer functionality, or group thereof).

Thus, both when identifier information is part of the data packets as well as by using end-marker packets, it is preferred according to the present invention that in order to mark or label the uplink data packets a first part of the at least one piece of application-specific identifier information is used, and that in order to mark or label the downlink data packets a second part of the at least one piece of application-specific identifier information (i.e. a different identifier information) is used.

Furthermore, it is advantageously possible and preferred according to the present invention that the at least one data transmission session is a PDU session, protocol data unit session, and/or wherein the session anchor functionality is a PDU session anchor, especially the user plane function of the core network.

Furthermore, it is advantageously possible and preferred according to the present invention that, as part of the first step, the user equipment, especially the session access control function or functionality and/or the application authorization function or functionality, queries and/or retrieves, from the core network, especially from a session management function of the core network, the at least one piece of application-specific identifier information, and especially communicates the at least one piece of application-specific identifier information with the core network, especially a session anchor functionality of the core network, wherein especially, as part of the second step, uplink data packets are marked or labelled, by the session access control function or functionality, and the downlink data packets are marked or labelled, by the core network, especially the session anchor functionality.

Thereby, it is advantageously possible that the determination of the application-specific identifier information is able to be managed centrally, e.g. by the session management function of the core network.

According to a further preferred embodiment of the present invention, in a third step prior to the first step, after the PDU session having been established or generated, the user equipment exchanges PDU session modification messages with the core network,
wherein especially the establishment or generation or subsequent modification of the PDU session comprises an indication of a capability related to the use of the at least one piece of application-specific identifier information for marking or labelling the uplink and downlink data packets related to the application or to the application layer functionality and/or an indication of the necessity to use the at least one piece of application-specific identifier information for marking or labelling the uplink and downlink data packets related to the application or to the application layer functionality.

By means of the user equipment exchanging PDU session modification messages with the core network, it is advantageously possible that the inventive benefits are able to be realized comparatively easily by using an established mechanism or manner to modify the data transmission session or the PDU session.

By means of using the indication of a capability (related to the assignment, to applications or application layer functionalities, of pieces of application-specific identifier information and their transport as part of the data transmission session or PDU session) and/or the indication of the necessity (to use and transport such pieces of application-specific identifier information) it is advantageously possible to modify the data transmission session or the PDU session such that the inventive mechanism is possible and/or even required, especially required for a certain application or application layer functionality or for a certain (specifically defined) group of applications or application layer functionalities or for a certain class of applications or application layer functionalities.

Furthermore, it is advantageously possible and preferred according to the present invention that the data transmission session additionally separates data into separate QoS flows, each indicating a specific Quality of Service to be applied to the traffic, wherein data of a given application flow is associated to one or more QoS flows

It is thereby advantageously possible, according to the present invention, to label or to differentiate - within the data transmission session, i.e. typically within the PDU session - the payload data (or data traffic) of the respective application or application layer functionality (or of the respective group of applications or group of application layer functionalities), and additionally use different quality-of-service flows.

Furthermore, the present invention relates to a user equipment for being operated within or as part of a telecommunications network, wherein the operation of the user equipment involves the operation of an application or an application layer functionality of the user equipment,
wherein the user equipment is configured to communicate with or as part of the telecommunications network and with an access network and a core network thereof, wherein the core network provides the user equipment with data connectivity towards a data network,
wherein the operation of the application or of the application layer functionality of the user equipment requires at least one data transmission session to be established between the user equipment and the core network such that downlink data packets are able to be transmitted from or via the core network to the user equipment and uplink data packets are able to be transmitted from the user equipment to or via the core network,
wherein, in order for downlink data packets, directed or related to the application or the application layer functionality, being able to form an application-specific downlink application flow, and uplink data packets, originating from the application or the application layer functionality, being able to form an application-specific uplink application flow, the user equipment is configured such that:
   -- at least one piece of application-specific identifier information is assigned to the application or the application layer functionality,
   -- the application or the application layer functionality is operated using the at least one data transmission session, wherein the data transmission session transports both the downlink data packets and the uplink data packets and at least part of the at least one piece of application-specific identifier information.

Furthermore, the present invention relates to a system or telecommunications network for operating a user equipment within or as part of the telecommunications network, wherein the operation of the user equipment involves the operation of an application or an application layer functionality of the user equipment,
wherein the telecommunications network comprises or is associated or assigned to an access network and to a core network, wherein the core network provides the user equipment with data connectivity towards a data network,
wherein the operation of the application or of the application layer functionality of the user equipment requires at least one data transmission session to be established between the user equipment and the core network such that downlink data packets are able to be transmitted from or via the core network to the user equipment and uplink data packets are able to be transmitted from the user equipment to or via the core network,
wherein, in order for downlink data packets, directed or related to the application or the application layer functionality, being able to form an application-specific downlink application flow, and uplink data packets, originating from the application or the application layer functionality, being able to form an application-specific uplink application flow, the system or the telecommunications network is configured such that:
   -- at least one piece of application-specific identifier information is assigned to the application or the application layer functionality,
   -- the application or the application layer functionality is operated using the at least one data transmission session, wherein the data transmission session transports both the downlink data packets and the uplink data packets and at least part of the at least one piece of application-specific identifier information.

Still additionally, the present invention relates to a session access control function or functionality of an inventive system or an inventive telecommunications network.

Additionally, the present invention relates to a program comprising a computer readable program code and/or a computer-readable medium comprising instructions, which, when executed on a computer and/or on a user equipment and/or on a session access control function or functionality and/or on a network node of a telecommunications network, or in part on a user equipment and/or in part on a session access control function or functionality and/or in part on a network node of a telecommunications network, causes the computer and/or the user equipment and/or the session access control function or functionality and/or the network node of the telecommunications network to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

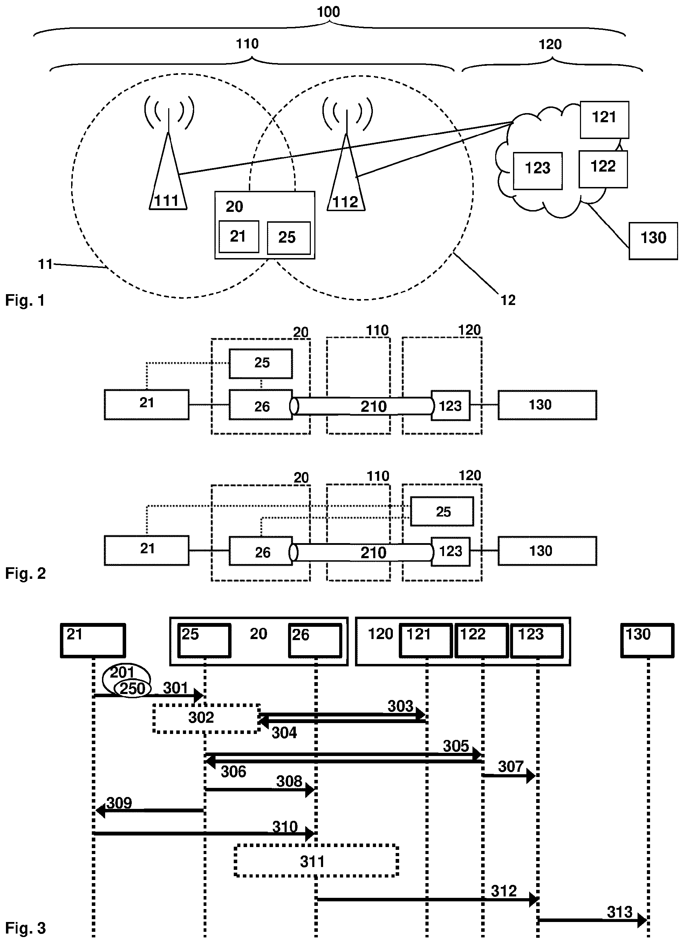

Figure 1 schematically illustrates a telecommunications network comprising an access network, a core network and a user equipment, wherein a data network is either part of the telecommunications network or connected to or accessible by the telecommunications network, wherein the user equipment comprises or provides an application authorization function or functionality for authorizing an application or an application layer functionality of the user equipment to access a data transmission session of the user equipment with the core network with or towards the data network.
Figure 2 schematically illustrates the user equipment, an application or application layer functionality of the user equipment, the access network, the core network and the data network according to the present invention, wherein two possible implementations according to the present invention are represented regarding the localization or association of the application authorization function or functionality.
Figures 3 to 5 schematically illustrate communication diagrams between the application, the user equipment, the core network and the data network according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The access network 110 comprises a plurality of radio cells 11, 12. Furthermore, the core network 120 is connected to a data network 130. The core network 120 provides the user equipment 20 with data connectivity towards the data network 130.

In the exemplary situation or scenario shown in Figure 1, a first base station entity 111 generates or is associated with or spans the first radio cell 11, and a second base station entity 112 generates or is associated with or spans the second radio cell 12. A user equipment 20 is part of or connected to the telecommunications network 100 through an air interface (or radio interface) with one of the base station entities (in the example shown, either the first base station entity 111 or the second base station entity 112). The user equipment 20 has or comprises an application 21 or an application layer functionality 21, e.g. an installed app or other program or program module. Furthermore, the user equipment 20 comprises, in the exemplary embodiment shown in Figure 1, an application authorization function or functionality 25 for authorizing the application 21 or the application layer functionality 21 to access a data transmission session that is not explicitly shown in Figure 1.

The core network 120 comprises an authorization server function 121, a session management function 122, and a user plane function 123. The user equipment 20 is typically, but not necessarily, mobile i.e. able to move with respect to the (typically, but not necessarily static) radio cells 11, 12 or corresponding base station entities 111, 112 of the access network 110.

Generally in the context of the present invention, the authorization server function 121 provides an authorization functionality; especially in the context of a telecommunications network according to the 5G standard, such an authorization functionality might be provided by an access and mobility management function and/or by an authentication server function and/or by a unified data management: The authentication server function (AUSF) typically provides the authentication functionality, the unified data management (UDM) has the authorization data, and the access and mobility management function (AMF) typically provides the actual authorization in dependency of these data.

According to the present invention - as in conventionally known telecommunications networks -, a data transmission session (or PDU session) is established, logically, between the user equipment 20 and the core network 120 (although, of course, the access network 110 is involved as well) and has an associated (or defined) quality-of-service level, i.e. several quality-of-service flows are able to be contained within the data transmission session.

In Figure 2, two representations or implementations, according to the present invention, are shown. Both representations or implementations show an application 21 or application layer functionality 21 of the user equipment 20, the user equipment 20, the access network 110, the core network 120 and the data network 130. Between the user equipment 20 and the core network 120, a PDU session or data transmission session 210 is schematically shown. The PDU session or data transmission session 210 is terminated (or anchored), in the core network 120, by means of a session anchor 123, or PDU session anchor 123, especially a user plane function 123 of the core network (especially in case of a 5G telecommunications network 100). The two implementations according to the present invention are primarily related to the localization or association of the application authorization function or functionality 25 - either with the application authorization function or functionality 25 integrated in or co-located with the user equipment 20, shown in the upper representation of Figure 2, or with the application authorization function or functionality 25 integrated in or co-located with the core network 120, shown in the lower representation of Figure 2. In both representations or implementations, the application authorization function or functionality 25 is exemplarily shown with a session access control function or functionality 26. The session access control function or functionality 26 is especially provided for policing the decision of the application authorization function or functionality 25, and especially triggers the downlink data packets and the uplink data packets to be marked or labelled.

Even though the application 21 or the application layer functionality 21 is represented, in Figure 2 (and also in Figures 3 to 5), dissociated from the user equipment 20, it is to be understood that the application 21 or the application layer functionality 21 is implemented or integrated in the user equipment 20.

In case that two different applications 21 or application layer functionalities 21 (typically as part of the user equipment 20, i.e. installed (as, e.g., an app) on the user equipment 20 or natively part of the user equipment 20, e.g. as a part of its operating system) both use a given PDU session or data transmission session 210, it is advantageously possible, according to the present invention, to:
-- mark or to label the downlink data packets and/or the uplink data packets, likewise on a per-application basis
   and/or
-- to limit access to such a PDU session or data transmission session 210 on a per-application basis.

This is both not possible in conventionally known telecommunications networks.

In conventionally known telecommunications networks, credentials are used or are able to be used for:
-- (the user equipment) getting or being provided access to the network or telecommunications network
-- and/or access to a given network slice
-- and/or the establishment of a data transmission session (or PDU session).

This means, using mainly 5G nomenclature, that regarding access to the network (especially in case of a public land mobile network), user equipment subscription data is used (which is typically stored in the user equipment's subscriber identity module, especially USIM) to register in the network via the access and mobility management function. Regarding access to a given (network) slice, a 5G network can require authentication and provide/reject authorization for access to specific (network) slice(s), especially in additionally to the credentials regarding access to the network. Especially for access to a given network slice and the establishment of a data transmission session (or PDU session), it is foreseen that an external credential server (especially outside of the core network) is able to be used. Regarding access to the network, this is also possible (e.g. in case of 5G-based private networks, i.e. SNPNs), however it is not commonly used in public mobile networks (public land mobile networks), the credentials used for granting access to a public land mobile network are, as defined by 3GPP standards, stored in a USIM (either a physical UICC or in electronic form, e.g. eSIM) in the user equipment. Other types of credentials may be stored elsewhere but are ultimately used in the communication between the user equipment and the core network to grant access to, e.g., a given slice and/or as part of a data transmission session (or PDU session) establishment procedure.

Furthermore regarding conventionally known telecommunications networks, a common use of such PDU session authentication is when a PDU session is used for connecting to a private data network (comprising or having assigned a data network name, DNN) for providing VPN-like data services, e.g. access to a corporate network, where the credentials used for PDU session establishment are not operator credentials but rather 3rd party credentials from, e.g. a company. As such, a specific PDU session might be used exclusively for a given data connection and authenticated via dedicated credentials. The current typical use of PDU sessions in mobile communication networks (often telecommunications network according to the 4G standard), is that two PDU sessions are present at almost all (or most) times: a PDU session for internet access (especially used by applications such as, e.g., browser, video streaming, etc. for connectivity to the Internet) and a PDU session for IP multimedia subsystem (IMS) access (especially used by the phone dialer - typically bundled as part of the user equipment's operating system). The respective PDU session anchor (PSA, this role being mainly played by the user plane function in 5G networks) may be different for each PDU session, or, alternatively, shared by more than one PDU sessions. A typical case of enterprise use is that the corporate virtual private network (VPN) substitutes the Internet DNN, thus "internet access" is then provided by the VPN (i.e. the corporate network), thus resulting also in two PDU sessions.

Additionally in conventionally known telecommunications networks, it is possible that an application has access to a PDU session (e.g. for common Internet DNN access) and to a further one supporting specific services such as edge features, e.g. over a different network slice; such a (further) . Such a further PDU session could potentially also be shared by several applications. Furthermore, it is possible in conventionally known telecommunications networks to have several PDU sessions providing connectivity to the same DNN (e.g. to provide "normal", high-bandwidth, best-effort via a PDU session and a separate PDU session realized, e.g., via a separate network slice, providing also ultra-reliable low-latency communication, URLLC, support and additional features but maybe with limited bandwidth).

Furthermore in conventionally known telecommunications networks, the PDU session conveys metadata, related to the traffic (or payload data packets) being transported, by marking transmitted data packets with identifiers. E.g., 3GPP TS 38.401 comprises the PDU session protocol stack, i.e. the protocol structure used for data being sent via PDU sessions, and 3GPP TS 38.415 shows how user plane packets (between the access network and the core network) are marked as belonging to a specific QoS flow (as part of the PDU session). Furthermore, within a GTP-U tunnel, a TEID mapping (tunnel endpoint identifiers) and a quality-of-service flow identifier is also used as meta data of a payload data packet and contains the traffic to a specific PDU session. Furthermore, 3GPP TS 38.301 comprises the user plane stack between the user equipment and the access network (for the case of a telecommunications network according to the 5G standard, 5G-NR) showing how differentiated quality-of-service flows are mapped by the user equipment into the protocol stack that provides communication between the user equipment and the access network. On the reverse side (i.e. between the access network and the user equipment), the reverse process is performed: On the access network - user equipment interface, quality-of-service flows are separated; the quality-of-service flow handling step, as defined in 3GPP TS 37.324 conventionally works by adding an end-marker control PDU containing a QFI, which indicates the ID of the quality-of-service flow (3GPP TS 23.501) to which the SDAP PDU belongs. As defined in 3GPP TS 37.324, "End-Marker control PDU is used by the SDAP entity at UE to indicate that it stops the mapping of the SDAP SDU of the QoS flow indicated by the QFI/PQFI to the DRB/SL-DRB on which the End-Marker control PDU is transmitted".

Furthermore in conventionally known telecommunications networks, the use of user equipment route selection policies (URSPs) is known in order to steer traffic towards specific PDU sessions. The URSP is defined in 3GPP TS 23.503 and is a set of one or more URSP rules, where a URSP rule is composed of: (a) a precedence value of the URSP rule identifying the precedence of the URSP rule among all the existing URSP rules; (b) a traffic descriptor, including either a match-all traffic descriptor, or at least one traffic descriptor element, and (c) one or more route selection descriptors each consisting of a precedence value of the route selection descriptor and either one PDU session type, or a non-seamless non-3GPP offload indication. The traffic descriptor elements might correspond to one or more application identifiers; to one or more IP 3 tuples as defined in 3GPP TS 23.503, i.e. the destination IP address, the destination port number, and the protocol in use above the IP; to one or more non-IP descriptors, i.e. destination information of non-IP traffic; to one or more DNNs; to one or more connection capabilities; or to one or more domain descriptors, i.e. destination FQDN(s). The PDU session type might comprise one or more of the following indications: SSC mode; one or more S-NSSAls; one or more DNNs; preferred access type; multi-access preference; a time window; and location criteria.

However, the use of application identifiers as part of user equipment route selection policies is to prescribe or enforce, regarding the transport of payload data packets related to an application of the user equipment, the use of a specific data network or data network name (DNN) and/or the use of a specific network slice (via an S-NSSAI indication) which might ultimately map to (or enforce the use of) a given PDU session. However, as part of that PDU session (or within the PDU session, i.e. among different application flows of data packets as part of the PDU session), such payload data packets of different applications are unable to be differentiated based on the use of metadata of the payload data packets, as the key point of the user equipment route selection policies is that it is to steer the decision through what PDU session the traffic of a given application ID should be routed, and not that the traffic an application sends is marked by the system, and accessible via metadata within the considered PDU session. Furthermore, using user equipment route selection policies does not provide any possibility to enforce that an application is authorized to access the PDU session. In addition, user equipment route selection policies are not even capable of setting/changing even the QoS level of certain traffic.

According to the present invention, a method for operating a user equipment 20 within or as part of a telecommunications network 100 is provided. As is typically the case, the operation of the user equipment 20 involves the operation of an application 21 or an application layer functionality 21 of the user equipment 20. Such an application 21 or an application layer functionality 21 might especially be an installed app or application on the user equipment 20 or a of the user equipment's 20 operating system, i.e. natively part of the user equipment 20. As is usually the case, the telecommunications network 100 comprises or is associated or assigned to the access network 110 and to the core network 120, wherein the core network 120 provides the user equipment 20 with data connectivity towards the data network 130.

The operation of the application 21 or of the application layer functionality 21 of the user equipment 20 requires at least one data transmission session 210 to be established between the user equipment 20 and the core network 120 (via the access network 110). Often, in reality, a plurality of data transmission sessions are established between the user equipment 20 and the core network 120, normally via the access network 110, and downlink data packets are able to be transmitted from or via the core network 120 to the user equipment 20 (i.e. either from the core network 120 or from the data network 130, and via the core network 120) as well as uplink data packets are able to be transmitted from the user equipment 20 to or via the core network 120 (i.e. either to the core network 120 or to the data network 130, and via the core network 120). This is also known from conventional telecommunications networks.

According to the present invention such downlink data packets that are directed or related to the application 21 or the application layer functionality 21 form an application-specific downlink application flow, and such uplink data packets that originate from the application 21 or from the application layer functionality 21 are able to form an application-specific uplink application flow. Regarding these application-specific uplink and/or downlink application flows, the present invention provides the possibility to assign an application-specific identifier information and to transport this application-specific identifier information together with the downlink data packets and the uplink data packets as part of the data transmission session or PDU session which is not possible in conventionally known telecommunications networks.

Thus, according to a preferred embodiment of the present invention, the user equipment 20 comprises a session access control function or functionality 26, wherein the session access control function or functionality 26 triggers the downlink data packets and/or the uplink data packets to be marked or labelled using at least part of the at least one piece of application-specific identifier information 260.

Preferably, the user equipment 20 comprises or is assigned to or is able to access an application authorization function or functionality 25, wherein the application authorization function or functionality 25 authorizes the application 21 or the application layer functionality 21 to access the at least one data transmission session 210. Preferably, the session access control function or functionality 26 additionally polices or executes the decision of the application authorization function or functionality 25, especially the decision regarding authorization of the application 21 or the application layer functionality 21 to access the at least one data transmission session 210. In order for the application 21 or the application layer functionality 21 to exchange payload data with the core network 120 and/or the data network 130, i.e. access the data transmission session or PDU session 210, the inventive method especially comprises the steps of:
-- the application 21 or the application layer functionality 21 transmitting an application access request message 201 to the application authorization function or functionality 25, the application access request message 201 comprising at least one piece of credential information 250 being related to the application 21 or the application layer functionality 21, and,
-- the application authorization function or functionality 25 transmitting - in case that the application access request message 201 is determined, by the application authorization function or functionality 25, to be valid - an application access grant message 202 to the application 21 or the application layer functionality 21.

Hence, the application authorization function or functionality 25 according to the present invention is provided or present in the user equipment 20 (or accessible to the user equipment 20) in an inventive telecommunications network 100. The application authorization function or functionality realizes an application authorization function (AAF) that authorizes applications 21 (or application layer functionalities 21) so that they can access a given PDU session 210, i.e. the considered at least one data transmission session 210. Especially, furthermore also the session access control function or functionality 26 is provided or present in the user equipment 20 (or accessible to the user equipment 20) in an inventive telecommunications network 100. The session access control function or functionality 26 realizes a PDU session access control function (PDU-ACF) that polices the decision of the AAF and especially marks (or labels) traffic, especially payload traffic, accordingly.

According to specific embodiments of the present invention, especially the two cases are considered, namely the location of the AAF (or application authorization function or functionality) 25 within the user equipment 20 (cf. the upper part of Figure 2) and the location of the AAF (or application authorization function or functionality) 25 within the core network 120 (cf. the lower part of Figure 2). In both cases, the PDU-ACF (or session access control function or functionality) 26 is preferably placed within the user equipment 20 (it does police the access to a given PDU session or data transmission session 210, after all). However, it is preferred according to the present invention (as the PDU-ACF functionality (session access control function or functionality) 26 would typically be placed in the user equipment 20) to locate the AAF (application authorization function or functionality) 25 in the core network 120 is not as beneficial as placing it at the user equipment 20.

According to an embodiment of the present invention, it is, hence, preferred that both an application (or application layer functionality) 21 and a further application (or further application layer functionality) are operated. According to this embodiment, both the application 21 and the further application are able to use the at least one data transmission session 210, established between the user equipment 20 and the core network 120, by means of having their respective application flow data labelled or marked by different respective pieces of identifier information. In addition, access to the data transmission session (in order to exchange payload data with or to be connected to the core network 120 and/or the data network 130) is requested by means of individual (or application-specific) application access request messages (to the application authorization function or functionality 25), wherein the application access request messages comprise, respectively, at least one piece of credential information (being related either to the application or to the further application).

In Figure 3, a communication diagram is schematically shown between the application 21, the user equipment 20, the core network 120 and the data network 130 according to the present invention. In Figure 3, it is supposed that the application authorization function or functionality 25 is part of the user equipment 20 and the session access control function or functionality 26 as well. Furthermore, the core network 120 comprises the authorization server function 121, the session management function 122, and the user plane function 123.

In a first processing step 301, the application 21 or application layer functionality 21 sends a request to access the data transmission session 210 (or PDU session 210) to the application authorization function or functionality 25; this request comprises or is identical to the application access request message 201 that in turn comprises at least one piece of credential information 250, i.e. the application credentials (being related to the application 21 or the application layer functionality 21). In a second processing step 302, the credential information is evaluated by the application authorization function or functionality 25. In a third processing step 303 and a fourth processing step 304, the application authorization function or functionality 25 queries the authorization server function 121 regarding the credential information received, and receives in return a result from the authorization server function 121. In a fifth processing step 305 and a sixth processing step 306, the application authorization function or functionality 25 queries and/or retrieves application flow information (related to the at least one piece of credential information 250 or related to the application 21 or to the application layer functionality 21 or to a group of applications 21 or group of application layer functionalities 21) from the session management function 122, and receives in return a result from the session management function 122. In a seventh processing step 307, the session management function 122 transmits the application flow information to the data transmission session anchor (or PDU session anchor, PSA, or user plane function) 123. In an eighth processing step 308, the application authorization function or functionality 25 sends a message to the session access control function or functionality 26 to setup the access of the respective (requesting) application 21 or application layer functionality 21 to or for the PDU session or data transmission session 210. In a ninth processing step 309, the application authorization function or functionality grants access (to the considered data transmission session or PDU session 210) to the application 21 or application layer functionality 21. In a tenth processing step 310 the application 21 or application layer functionality 21 sends (operationally) data (payload data packets) to the session access control function or functionality 26, and in an eleventh processing step 311 the session access control function or functionality 26 marks (or labels) data packets received from the application 21 or application layer functionality 21 (using at least one piece of application-specific identifier information) so that, within the data transmission session or PDU session 210, it is possible to differentiate the different applications (or groups of applications or application categories), i.e. the payload data transmitted using the data transmission session or PDU session 210 consists of different application flows. In a twelfth processing step the session access control function or functionality 26 transmits the payload data (received, in the tenth processing step 310, from the application 21 or application layer functionality 21) to the core network 120, especially the user plane function 123, acting as data transmission session anchor (or PDU session anchor). In a thirteenth processing step 313, these data are forwarded, by the core network 120, especially the user plane function 123, to the data network 130.

Hence according to an embodiment of the present invention, according to which a PDU-ACF (or session access control function or functionality) 26 is present, the PDU-ACF (or session access control function or functionality) 26 marks data flows within the respective PDU session 210 based on the originating application 21 or application layer functionality 21; hence, within the PDU session or the data transmission session 210, different application flows (of payload data related to different applications 21 or application layer functionalities 21 accessing the considered PDU session or data transmission session 210) are able to be differentiated (or a classification performed of these different data flows within the respective PDU session 210); according to the present invention, quality-of-service flows are additionally possible to be considered within the respective PDU session 210. Hence, according to the present invention, application-based (or application-specific) flow classification is able to be used complementarily to quality-of-service markings. Preferably according to the present invention, the session access control function or functionality 26 is in charge of policing access to the PDU session or data transmission session 210 (e.g. when requesting a socket to the operating system of the user equipment 20, the application 21 or application layer functionality 21 needs to include credentials (at least one piece of credential information 250) and will only successfully be able to create the socket object if the access is granted by lower layers) polices the access of the application 21 or application layer functionality 21 to the data transmission session or PDU session 210.

The core network 120 is then able to use the application-based flow classification information (complementarily to quality-of-service markings) to (among other uses):
-- apply different prioritization/traffic policies to traffic from given applications 21 or application layer functionalities 21,
-- apply different charging rules to different applications 21 or application layer functionalities 21,
-- perform the above-mentioned functionality without the need to do or apply deep packet inspection (DPI) to the traffic.

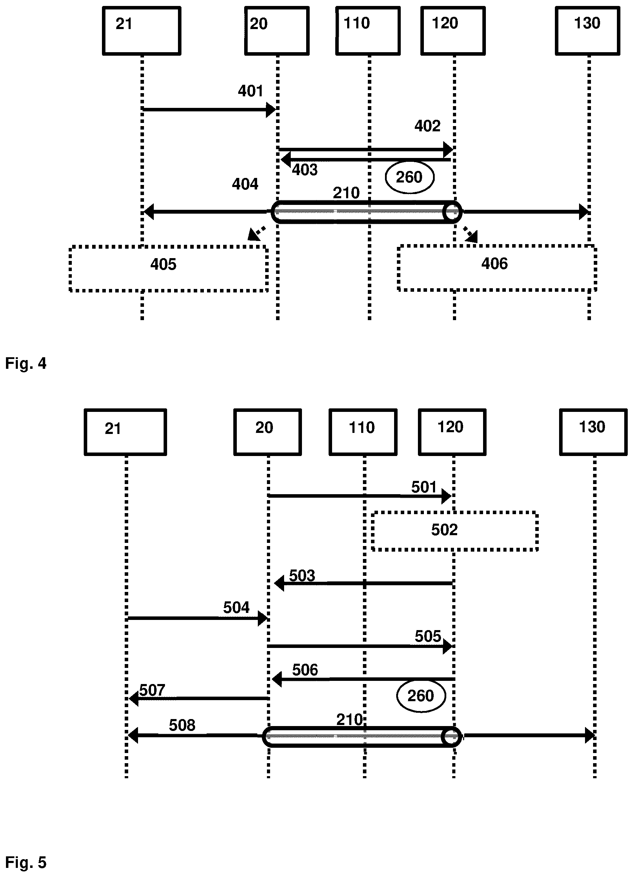

In Figure 4, a communication diagram is schematically shown between the application 21, the user equipment 20, the access network 110, the core network 120 and the data network 130 according to a preferred embodiment of the present invention. In Figure 4, it is supposed that the application authorization function or functionality 25 is part of the user equipment 20. Especially, the session access control function or functionality 26 is as well part of the user equipment 20. Furthermore, the core network 120 especially comprises components or functions such as the authorization server function 121, the session management function 122, and the user plane function 123; however these functions or components are not specifically shown in Figure 4.

Primarily, Figure 4 shows an embodiment according to the present invention that is able to realize the application-based (or application-specific) traffic marking (or traffic labelling), especially of traffic (or payload data packets) as part of a data transmission session or PDU session 210 that is, at least potentially, related to more than one application or application layer functionality (or more than one group of applications or more than one category of applications). In a first processing step 401, the application 21 or application layer functionality 21 sends an application-related information, especially an information identifying the application or application layer functionality. This application-related information may at least partly correspond to the flow information (or piece of application-specific identifier information 260) but it does not need to. In a second processing step 402 and a third processing step 403, the user equipment 20 (especially the session access control function or functionality 26 and/or the application authorization function or functionality 25) queries and/or retrieves from the core network 120 (especially the session management function 123) the flow information (or piece of application-specific identifier information 260) to mark or label payload traffic. In a fourth processing step 404, payload data (i.e. data traffic) between the application 21 or application layer functionality 21 and the data network 130 through the data transmission session or PDU session 210 is (operationally) exchanged. During the fourth processing step 404, payload traffic in uplink direction (i.e. in the direction of the core network 120 and/or the data network 130, originating from the application 21 or application layer functionality 21) is marked (in a fifth processing step 405), by the user equipment 20, so that the PDU session 210 consists of (or comprises) application flows, i.e. in this case an application-specific uplink application flow or a plurality thereof (in case that different applications 21 or application layer functionalities 21 are involved that do not belong to the same group or category of applications, i.e. have different pieces of flow information attached). Furthermore during the fourth processing step 404, payload traffic in downlink direction (i.e. in the direction from the core network 120 and/or from the data network 130 towards the user equipment 20 and the application 21 or application layer functionality 21) is marked (in a sixth processing step 406), by the core network 120 (or a core network entity), so that the PDU session 210 consists of (or comprises) application flows, i.e. in this case an application-specific downlink application flow or a plurality thereof (in case that different applications 21 or application layer functionalities 21 are involved that do not belong to the same group or category of applications, i.e. have different pieces of flow information attached).

According to the present invention, it is furthermore preferred to implement the present invention by means of an extension to the PDU session modification to allow for application-based (or application-specific) traffic marking (or traffic labelling), especially of traffic (or payload data packets) as part of a data transmission session or PDU session 210. This is schematically shown in Figure 5 which shows, again, a communication diagram between the application 21, the user equipment 20, the access network 110, the core network 120 and the data network 130. Again in Figure 5, it is supposed that the application authorization function or functionality 25 is part of the user equipment 20. Especially, the session access control function or functionality 26 is as well part of the user equipment 20. Furthermore, the core network 120 especially comprises components or functions such as the authorization server function 121, the session management function 122, and the user plane function 123; however, these functions or components are not specifically shown in Figure 5.

Primarily, Figure 5 shows an embodiment of the present invention where the application-based (or application-specific) traffic marking (or application-based flow separation) within a data transmission session or PDU session 21 is implemented by means of an extension to the PDU session modification. In a first processing step 501, the user equipment 20 sends or transmits a PDU session establishment request (message) to the core network 120. In a second processing step 502, the core network 120 establishes the PDU session 210 (or the data transmission session 210). In a third processing step 503 the core network 120 sends or transmits a PDU session establishment accept (message) to the user equipment 20.

In a fourth processing step 504, the application 21 or application layer functionality 21 sends a request to configure the (or the at least one) data transmission session 210 (or PDU session 210) to the user equipment 20, especially to its session access control function or functionality 26; this request comprises an application-related information, especially an information identifying the application or application layer functionality. This application-related information may at least partly correspond to the flow information (or piece of application-specific identifier information 260) but it does not need to. This processing step is able to be realized by means of an extension to OS APIs so that when a communications socket is initialized, an application ID (or similar application-related information) is added to the socket creation call. Internally, this socket call is mapped to a PDU session, but in this case would only return if the user equipment stack successfully performs the PDU session modification procedure. In a fifth processing step 505, a PDU session modification request (message), especially comprising the application ID (or similar application-related information) is transmitted, by the user equipment 20, to the core network 120. In a sixth processing step 506, a PDU session modification accept (message) (or 'PDU session modification accepted'), especially comprising the application flow identifier information, i.e. the at least one piece of application-specific identifier information 260, is transmitted, by the core network 120, to the user equipment 20. In a seventh processing step 507, a message "PDU session ready to use" is communicated with the application 21 or application layer functionality 21 by means of transmitting - by the user equipment 20 - a corresponding message to the application 21 or application layer functionality 21. In an eighth processing step 508, payload data (i.e. data traffic) between the application 21 or application layer functionality 21 and the data network 130 through the data transmission session or PDU session 210 is (operationally) exchanged.

According to the present invention, it is preferred that an indication of additional capability is implemented, i.e. the indication that the PDU session supports application-based authentication and/or packet marking (or packet labelling), and also regarding whether it is mandatory. Similarly, these capabilities can be added to the PDU establishment request (e.g. the user equipment 20 requests such capability to be present in the provided PDU session / data transmission session 210). Such indications are preferably transmitted, sent and/or received prior to the first and third processing steps 501, 503 according to Figure 5, i.e. the PDU session establishment request (message) (first processing step 501) comprises additional capability indications or corresponding pieces of information indicative of such additional capabilities, and the PDU session establishment accept (message) (third processing step 503) comprises the indication or corresponding pieces of information indicative of such additional capabilities.

Furthermore, it is preferred according to the present invention that an awareness of the access network 110 is realized. In a 5G network, the radio access network 110 is aware of PDU sessions and of its related QoS flows. This information is used, e.g. by gNBs (i.e. base station entities) to steer scheduling. According to the present invention, by extending the PDU session framework to applications (or application layer functionalities of the user equipment), the radio access network 110 is preferably aware of the application flow information (especially in addition to being aware of the network slice used and/or the PDU session used and/or the quality-of-service level assigned to each data flow), and it is advantageously possible to use the application flow information to:
-- steer scheduling, and/or
-- steer the activation of specific radio access network features on a per-application basis (e.g. L4S marking, for example for delay-critical applications), and/or
-- based on application flow, the core network 120 is able to instruct the access network 110 to apply certain policies/features/mobility restrictions/priority/etc. to the traffic (payload data) regarding a certain application or a certain group of applications.

In certain embodiments of the present invention, it is furthermore preferred that the credential information 250 relates to two or more applications 21 or application layer functionalities 21, especially to a group of applications 21 or application layer functionalities 21. This means that such two or more applications 21 or application layer functionalities 21 share or use the same credential information. In addition to or alternatively, in certain embodiments of the present invention, it is also preferred that the at least one piece of application-specific identifier information 260 and/or the at least one piece of credential information 250 is valid for two or more data transmission sessions 210 - i.e. it is possible according to the present invention that (according to one extreme) an application 21 or an application layer functionality 21 has or uses a specific piece of application-specific identifier information 260 and/or a specific credential information 250 (different from the application-specific identifier information 260 and/or the credential information other applications or application layer functionalities use) and/or that the application 21 or the application layer functionality 21 has or uses different pieces of application-specific identifier information 260 and/or different pieces of credential information 250 for different data transmission sessions or PDU sessions 210; and (according to the other extreme) a plurality of applications 21 or a plurality of application layer functionalities 21 (or a group of applications 21 or a group of application layer functionalities 21) has or uses a common piece of application-specific identifier information 260 and/or a common piece of credential information 250 (but different from the credential information of other applications or application layer functionalities) and/or that the plurality of applications 21 or the plurality of application layer functionalities 21 have or use a common piece of application-specific identifier information 260 and/or a common piece of credential information 250 for different data transmission sessions or PDU sessions 210.

According to the present invention, the packet marking (i.e. that downlink data packets and uplink data packets are marked or labelled using at least part of the at least one piece of application-specific identifier information 260) is especially proposed to be implemented as follows, especially regarding the transmission (or traffic) between the user equipment 20 and the access network 110:
-- Extension of SDAP to take into account the application flow ID (application-specific identifier information 260), i.e. extension of End-Marker Control PDU or addition of an additional end-marker Control PDU for the application flow ID (application-specific identifier information 260) and/or
-- Marking of the data packet at the IP or Ethernet layer (addition of header information such as DSCP (Differential Service Code Point) or IP header extension) and/or
-- Addition of additional data packets in the data flow that are able to be used by the core network 120 similarly to End-Marker Control PDUs (over-the-top approach). Regarding the transmission (or traffic) between the access network 110 and the core network 120, the following measures or extensions (or the spare part or parts, i.e. the parts of the PDU session frame structure that are not used or defined) of the PDU session protocol is preferably used in order to easily be adapted to add an application flow ID (application-specific identifier information 260).

In the other direction, the marking of incoming packets based on flow detection by the core network 120 is also considered, e.g. by mapping downlink traffic based on the TCP/UDP ports used by the uplink packets.

According to the present invention, the main point of marking data flows within a PDU session per application (i.e. in an application-specific or application-based manner) is to allow the 5G system elements to discern (or to differentiate or to distinguish) such flows to, e.g., apply different charging policies. When considering user equipment route selection policies, and solely observing the packet flow, it is not discernible whether some traffic landed in a certain access network because of a URSP or due to other reasons. However, user equipment route selection policies might be extended in order to provide a possibility such that a flow marking according to the present invention might indeed be realized via URSPs (or rather a generalized form of URSPs, the "RS" standing for "Route Selection"). Such an implementation of the application flow marking according to the present invention but based on the use of user equipment route selection policies involves the following: the core network 120 instructs the user equipment 20 to mark (by means of using at least one piece of application-specific identifier information 260) the traffic of a specific application ID and the URSP is extended so that it allows instead of a "route selection descriptor list" a "traffic marking" action, whereas the traffic is marked to belong to (or to be related to) an application flow. Additionally, a traffic description that is able to be used together or alternatively is whether a given application provides credentials (which are able to be evaluated by the core network 120, not the URSP), in which case it should route the traffic via a PDU session that supports application authentication.

## Claims

1. Method for operating a user equipment (20) within or as part of a telecommunications network (100), wherein the operation of the user equipment (20) involves the operation of an application (21) or an application layer functionality (21) of the user equipment (20), wherein the user equipment (20) comprises a session access control function or functionality (26) and an application authorization function or functionality (25),
wherein the telecommunications network (100) comprises or is associated or assigned to an access network (110) and to a core network (120), wherein the core network (120) provides the user equipment (20) with data connectivity towards a data network (130),
wherein the operation of the application (21) or of the application layer functionality (21) of the user equipment (20) requires at least one data transmission session (210) to be established between the user equipment (20) and the core network (120) such that downlink data packets are able to be transmitted from or via the core network (120) to the user equipment (20) and uplink data packets are able to be transmitted from the user equipment (20) to or via the core network (120),
wherein, in order for downlink data packets, directed or related to the application (21) or the application layer functionality (21), being able to form an application-specific downlink application flow, and uplink data packets, originating from the application (21) or the application layer functionality (21), being able to form an application-specific uplink application flow, the method comprises the following steps:
-- in a first step, at least one piece of application-specific identifier information (260) is assigned to the application (21) or the application layer functionality (21),
**--** in a second step, the application (21) or the application layer functionality (21) is operated using the at least one data transmission session (210), wherein the application authorization function or functionality (25) authorizes the application (21) or the application layer functionality (21) to access the at least one data transmission session (210), wherein the session access control function or functionality (26) additionally polices or executes the decision of the application authorization function or functionality (25), specificallythe decision regarding authorization of the application (21) or the application layer functionality (21) to access the at least one data transmission session (210), wherein the data transmission session (210) transports both the downlink data packets and the uplink data packets and at least part of the at least one piece of application specific identifier information (260), wherein the session access control function or functionality (26) triggers the downlink data packets and the uplink data packets to be marked or labelled using at least part of the at least one piece of application specific identifier information (260), wherein the downlink data packets are labelled or marked by a session anchor functionality of the core network (120) and the uplink data packets are labelled or marked by the session access control function or functionality (26) of the user equipment (20), wherein
-- application-specific identifier information is included with the downlink and uplink data packets within the data transmission session (210) by the user equipment (20) and the core network (120), and/or
-- end-marker packets, containing at least one piece of application-specific identifier information, are introduced in the data transmission session (210) by the user equipment (20) and the core network (120), wherein the end-marker packets indicate that subsequent packets belong to a specific application or application group flow,
wherein the core network (120) uses an application flow classification to apply different prioritization or traffic policies to traffic from given applications (21) or application layer functionalities (21), or to apply different charging rules to different applications (21) or application layer functionalities (21).

2. Method according to one of the preceding claims, wherein the operation of the user equipment (20) furthermore involves the operation of a further application or a further application layer functionality of the user equipment (20),
wherein the operation of the further application or of the further application layer functionality of the user equipment (20) also uses the at least one data transmission session (210) established between the user equipment (20) and the core network (120),
wherein, in order for the further application or the further application layer functionality to exchange payload data with or to be connected to the core network (120) and/or the data network (130), using the at least one data transmission session (210), at least one piece of application-specific further identifier information is assigned to the further application or the further application layer functionality, and the further application or the further application layer functionality is operated using the at least one data transmission session (210), wherein both the respective further downlink data packets and the respective further uplink data packets comprise at least part of the at least one piece of application-specific further identifier information.

3. Method according to one of the preceding claims, wherein the at least one piece of application-specific identifier information (260) relates to two or more applications (21) or application layer functionalities (21), especially to a group of applications (21) or application layer functionalities (21).

4. Method according to one of the preceding claims, wherein the at least one piece of application-specific identifier information relates to or is used with regard to more than one data transmission session (210).

5. Method according to one of the preceding claims, wherein, as part of the first step, the user equipment (20), especially the session access control function or functionality (26) and/or the application authorization function or functionality (25), queries and/or retrieves, from the core network (120), especially from a session management function of the core network (120), the at least one piece of application-specific identifier information (260), and especially communicates the at least one piece of application-specific identifier information (260) with the core network (120), especially the session anchor functionality of the core network (120),.

6. Method according to one of the preceding claims, wherein in order to mark or label the uplink data packets a first part of the at least one piece of application-specific identifier information (260) is used, and wherein in order to mark or label the downlink data packets a second part of the at least one piece of application-specific identifier information (260) is used.

7. Method according to one of the preceding claims, wherein the at least one data transmission session (210) is a PDU session (210), protocol data unit session, and/or wherein the session anchor functionality is a PDU session anchor, especially the user plane function of the core network (120).

8. Method according to one of the preceding claims, wherein, in a third step prior to the first step, after the PDU session (210) having been established or generated, the user equipment (20) exchanges PDU session modification messages with the core network (120),
wherein especially the establishment or generation or subsequent modification of the PDU session (210) comprises an indication of a capability related to the use of the at least one piece of application-specific identifier information (260) for marking or labelling the uplink and downlink data packets related to the application (21) or to the application layer functionality (21) and/or an indication of the necessity to use the at least one piece of application-specific identifier information (260) for marking or labelling the uplink and downlink data packets related to the application (21) or to the application layer functionality (21).

9. Method according to one of the preceding claims, wherein the data transmission session additionally separates data into separate QoS flows, each indicating a specific Quality of Service to be applied to the traffic, wherein data of a given application flow is associated to one or more QoS flows

10. User equipment (20) for being operated within or as part of a telecommunications network (100), wherein the operation of the user equipment (20) involves the operation of an application (21) or an application layer functionality (21) of the user equipment (20), wherein the user equipment (20) comprises a session access control function or functionality (26) and an application authorization function or functionality (25),
wherein the user equipment (20) is configured to communicate with or as part of the telecommunications network (100) and with an access network (110) and a core network (120) thereof, wherein the core network (120) provides the user equipment (20) with data connectivity towards a data network (130),
wherein the operation of the application (21) or of the application layer functionality (21) of the user equipment (20) requires at least one data transmission session (210) to be established between the user equipment (20) and the core network (120) such that downlink data packets are able to be transmitted from or via the core network (120) to the user equipment (20) and uplink data packets are able to be transmitted from the user equipment (20) to or via the core network (120),
wherein, in order for downlink data packets, directed or related to the application (21) or the application layer functionality (21), being able to form an application-specific downlink application flow, and uplink data packets, originating from the application (21) or the application layer functionality (21), being able to form an application-specific uplink application flow, and in order for the core network (120) being able to use an application flow classification to apply different prioritization or traffic policies to traffic from given applications (21) or application layer functionalities (21), or to apply different charging rules to different applications (21) or application layer functionalities (21), the user equipment (20) is configured such that:
-- at least one piece of application-specific identifier information (260) is assigned to the application (21) or the application layer functionality (21),
-- the application (21) or the application layer functionality (21) is operated using the at least one data transmission session (210), wherein the application authorization function or functionality (25) authorizes the application (21) or the application layer functionality (21) to access the at least one data transmission session (210), wherein the session access control function or functionality (26) additionally polices or executes the decision of the application authorization function or functionality (25), especially the decision regarding authorization of the application (21) or the application layer functionality (21) to access the at least one data transmission session (210) wherein the data transmission session (210) transports both the downlink data packets and the uplink data packets and at least part of the at least one piece of application specific identifier information (260)wherein the session access control function or functionality (26) triggers the downlink data packets and the uplink data packets to be marked or labelled using at least part of the at least one piece of application specific identifier information (260), wherein the session access control function or functionality (26) of the user equipment (20) is configured to label or mark the uplink data packets by means of the at least one piece of application-specific identifier information wherein the user equipment (20) is further configured such that:
-- application-specific identifier information is uplink data packets within the data transmission session (210) by the user equipment (20) and the core network (120), and/or
-- end-marker packets, containing at least one piece of application-specific identifier information, are introduced in the data transmission session (210) by the user equipment (20, wherein the end-marker packets indicate that subsequent packets belong to a specific application or application group flow.

11. Telecommunications network (100) for operating a user equipment (20) within or as part of the telecommunications network (100), wherein the operation of the user equipment (20) involves the operation of an application (21) or an application layer functionality (21) of the user equipment (20), wherein the telecommunications network (100) comprises a user equipment (20) and wherein the user equipment (20) comprises a session access control function or functionality (26) and an application authorization function or functionality (25), wherein the telecommunications network (100) comprises or is associated or assigned to an access network (110) and to a core network (120), wherein the core network (120) provides the user equipment (20) with data connectivity towards a data network (130),
wherein the operation of the application (21) or of the application layer functionality (21) of the user equipment (20) requires at least one data transmission session (210) to be established between the user equipment (20) and the core network (120) such that downlink data packets are able to be transmitted from or via the core network (120) to the user equipment (20) and uplink data packets are able to be transmitted from the user equipment (20) to or via the core network (120),
wherein, in order for downlink data packets, directed or related to the application (21) or the application layer functionality (21), being able to form an application-specific downlink application flow, and uplink data packets, originating from the application (21) or the application layer functionality (21), being able to form an application-specific uplink application flow, the telecommunications network (100) is configured such that:
-- at least one piece of application-specific identifier information (260) is assigned to the application (21) or the application layer functionality (21),
-- the application (21) or the application layer functionality (21) is operated using the at least one data transmission session (210), wherein the application authorization function or functionality (25) authorizes the application (21) or the application layer functionality (21) to access the at least one data transmission session (210), wherein the session access control function or functionality (26) additionally polices or executes the decision of the application authorization function or functionality (25), specifically the decision regarding authorization of the application (21) or the application layer functionality (21) to access the at least one data transmission session (210),
wherein the data transmission session (210) transports both the downlink data packets and the uplink data packets and at least part of the at least one piece of application specific identifier information (260), wherein the session access control function or functionality (26) triggers the downlink data packets and the uplink data packets to be marked or labelled using at least part of the at least one piece of application specific identifier information (260), wherein the session anchor functionality of the core network (120) is configured to label or mark the downlink data packets using at least part of the at least one piece of application-specific identifier information (260),
wherein the core network (120) is configured such that:
-- application-specific identifier information is included with the downlink data packets within the data transmission session (210) the core network (120), and/or
-- end-marker packets, containing at least one piece of application-specific identifier information, are introduced in the data transmission session (210) by the core network (120), wherein the end-marker packets indicate that subsequent packets belong to a specific application or application group flow wherein the core network (120) uses an application flow classification to apply different prioritization or traffic policies to traffic from given applications (21) or application layer functionalities (21), or to apply different charging rules to different applications (21) or application layer functionalities (21).

12. Program comprising a computer readable program code or computer-readable medium comprising instructions which, when executed on a computer and/or on a user equipment (20) and/or on a session access control function or functionality (26) and/or on a network node of a telecommunications network (100), or in part on a user equipment (20) and/or in part on a session access control function or functionality (26) and/or in part on a network node of a telecommunications network (100), causes the computer and/or the user equipment (20) and/or the session access control function or functionality (26) and/or the network node of the telecommunications network (100) to perform a method according one of claims 1 to 9.

## Patentansprüche

1. Verfahren zum Betreiben eines Benutzergeräts (20) innerhalb oder als Teil eines Telekommunikationsnetzes (100), wobei der Betrieb des Benutzergeräts (20) den Betrieb einer Anwendung (21) oder einer Anwendungsschicht-Funktionalität (21) des Benutzergeräts (20) umfasst, wobei das Benutzergerät (20) eine Sitzungszugriffs-Kontrollfunktion oder -funktionalität (26) und eine Anwendungsautorisierungsfunktion oder - funktionalität (25) umfasst, wobei das Telekommunikationsnetz (100) ein Zugangsnetz (110) und ein Kernnetz (120) umfasst oder diesem zugeordnet ist, wobei das Kernnetz (120) dem Benutzergerät (20) Datenkonnektivität zu einem Datennetz (130) bereitstellt, wobei der Betrieb der Anwendung (21) oder der Anwendungsschicht-Funktionalität (21) des Benutzergeräts (20) erfordert, dass mindestens eine Datenübertragungssitzung (210) zwischen dem Benutzergerät (20) und dem Kernnetz (120) eingerichtet wird, so dass Downlink-Datenpakete vom Kernnetz (120) oder über das Kernnetz (120) an das Benutzergerät (20) übertragen werden können und Uplink-Datenpakete vom Benutzergerät (20) zum Kernnetz (120) oder über das Kernnetz (120) übertragen werden können, wobei das Verfahren die folgenden Schritte umfasst, damit Downlink-Datenpakete, die auf die Anwendung (21) oder die Anwendungsschicht-Funktionalität (21) gerichtet oder mit dieser in Zusammenhang stehen, einen anwendungsspezifischen Downlink-Anwendungsfluss bilden können, und Uplink-Datenpakete, die von der Anwendung (21) oder der Anwendungsschicht-Funktionalität (21) stammen, einen anwendungsspezifischen Uplink-Anwendungsfluss bilden können:
-- in einem ersten Schritt wird der Anwendung (21) oder der Anwendungsschicht-Funktionalität (21) mindestens eine anwendungsspezifische Identifikationsinformation (260) zugewiesen,
-- in einem zweiten Schritt wird die Anwendung (21) oder die Anwendungsschicht-Funktionalität (21) unter Verwendung der mindestens einen Datenübertragungssitzung (210) betrieben, wobei die Anwendungsautorisierungsfunktion oder -funktionalität (25) die Anwendung (21) oder die Anwendungsschicht-Funktionalität (21) zum Zugriff auf die mindestens eine Datenübertragungssitzung (210) autorisiert, wobei die Sitzungszugriffs-Kontrollfunktion oder -funktionalität (26) zusätzlich die Entscheidung der Anwendungsautorisierungsfunktion oder -funktionalität (25) überwacht oder ausführt, insbesondere die Entscheidung bezüglich der Autorisierung der Anwendung (21) oder der Anwendungsschicht-Funktionalität (21) zum Zugriff auf die mindestens eine Datenübertragungssitzung (210), wobei die Datenübertragungssitzung (210) sowohl die Downlink-Datenpakete als auch die Uplink-Datenpakete und mindestens einen Teil der mindestens einen anwendungsspezifischen Identifikationsinformation (260) transportiert, wobei die Sitzungszugriffs-Kontrollfunktion oder -funktionalität (26) veranlasst, dass die Downlink-Datenpakete und die Uplink-Datenpakete unter Verwendung mindestens eines Teils der mindestens einen anwendungsspezifischen Identifikationsinformation (260) markiert oder gekennzeichnet werden, wobei die Downlink-Datenpakete von einer Sitzungsankerfunktionalität des Kernnetzes (120) gekennzeichnet oder markiert werden und die Uplink-Datenpakete von der Sitzungszugriffs-Kontrollfunktion oder -funktionalität (26) des Benutzergeräts (20) gekennzeichnet oder markiert werden, wobei
**--** anwendungsspezifische Identifikationsinformation in den Downlink- und Uplink-Datenpaketen innerhalb der Datenübertragungssitzung (210) durch das Benutzergerät (20) und das Kernnetz (120) enthalten ist, und/oder
-- Endmarkierungspakete, die mindestens eine anwendungsspezifische Identifikationsinformation enthalten, in der Datenübertragungssitzung (210) durch das Benutzergerät (20) und das Kernnetz (120) eingeführt werden, wobei die Endmarkierungspakete anzeigen, dass nachfolgende Pakete zu einem bestimmten Anwendungs- oder Anwendungsgruppenfluss gehören, wobei das Kernnetz (120) eine Anwendungsfluss-Klassifizierung verwendet, um unterschiedliche Priorisierung oder Verkehrsrichtlinien auf den Verkehr von gegebenen Anwendungen (21) oder Anwendungsschicht-Funktionalitäten (21) anzuwenden oder um unterschiedliche Abrechnungsregeln auf verschiedene Anwendungen (21) oder Anwendungsschicht-Funktionalitäten (21) anzuwenden.

2. Verfahren nach einem der vorhergehenden Ansprüche, wobei der Betrieb des Benutzergeräts (20) ferner den Betrieb einer weiteren Anwendung oder einer weiteren Anwendungsschicht-Funktionalität des Benutzergeräts (20) umfasst, wobei der Betrieb der weiteren Anwendung oder der weiteren Anwendungsschicht-Funktionalität des Benutzergeräts (20) ebenfalls die mindestens eine Datenübertragungssitzung (210) verwendet, die zwischen dem Benutzergerät (20) und dem Kernnetz (120) eingerichtet wurde, wobei mindestens eine anwendungsspezifische weitere Identifikationsinformation der weiteren Anwendung oder der weiteren Anwendungsschicht-Funktionalität zugewiesen wird, damit die weitere Anwendung oder die weitere Anwendungsschicht-Funktionalität unter Verwendung der mindestens einen Datenübertragungssitzung (210) Nutzdaten mit dem Kernnetz (120) und/oder dem Datennetz (130) austauschen oder mit diesen verbunden sein kann, und die weitere Anwendung oder die weitere Anwendungsschicht-Funktionalität unter Verwendung der mindestens einen Datenübertragungssitzung (210) betrieben wird, wobei sowohl die jeweiligen weiteren Downlink-Datenpakete als auch die jeweiligen weiteren Uplink-Datenpakete mindestens einen Teil der mindestens einen anwendungsspezifischen weiteren Identifikationsinformation umfassen.

3. Verfahren nach einem der vorhergehenden Ansprüche, wobei sich die mindestens eine anwendungsspezifische Identifikationsinformation (260) auf zwei oder mehr Anwendungen (21) oder Anwendungsschicht-Funktionalitäten (21), insbesondere auf eine Gruppe von Anwendungen (21) oder Anwendungsschicht-Funktionalitäten (21), bezieht.

4. Verfahren nach einem der vorhergehenden Ansprüche, wobei sich die mindestens eine anwendungsspezifische Identifikationsinformation auf mehr als eine Datenübertragungssitzung (210) bezieht oder in Bezug auf diese verwendet wird.

5. Verfahren nach einem der vorhergehenden Ansprüche, wobei als Teil des ersten Schritts das Benutzergerät (20), insbesondere die Sitzungszugriffs-Kontrollfunktion oder - funktionalität (26) und/oder die Anwendungsautorisierungsfunktion oder -funktionalität (25), die mindestens eine anwendungsspezifische Identifikationsinformation (260) vom Kernnetz (120), insbesondere von einer Sitzungsverwaltungsfunktion des Kernnetzes (120), abfragt und/oder abruft und insbesondere die mindestens eine anwendungsspezifische Identifikationsinformation (260) mit dem Kernnetz (120), insbesondere der Sitzungsankerfunktionalität des Kernnetzes (120), kommuniziert.

6. Verfahren nach einem der vorhergehenden Ansprüche, wobei zur Markierung oder Kennzeichnung der Uplink-Datenpakete ein erster Teil der mindestens einen anwendungsspezifischen Identifikationsinformation (260) verwendet wird, und wobei zur Markierung oder Kennzeichnung der Downlink-Datenpakete ein zweiter Teil der mindestens einen anwendungsspezifischen Identifikationsinformation (260) verwendet wird.

7. Verfahren nach einem der vorhergehenden Ansprüche, wobei die mindestens eine Datenübertragungssitzung (210) eine PDU-Sitzung (210), eine Protokolldateneinheit-Sitzung, ist und/oder wobei die Sitzungsankerfunktionalität ein PDU-Sitzungsanker ist, insbesondere die Benutzerebenenfunktion des Kernnetzes (120).

8. Verfahren nach einem der vorhergehenden Ansprüche, wobei in einem dritten Schritt vor dem ersten Schritt, nachdem die PDU-Sitzung (210) eingerichtet oder erzeugt wurde, das Benutzergerät (20) PDU-Sitzungsänderungsnachrichten mit dem Kernnetz (120) austauscht, wobei insbesondere die Einrichtung oder Erzeugung oder nachträgliche Änderung der PDU-Sitzung (210) eine Anzeige einer Fähigkeit in Bezug auf die Verwendung der mindestens einen anwendungsspezifischen Identifikationsinformation (260) zur Markierung oder Kennzeichnung der Uplink- und Downlink-Datenpakete in Bezug auf die Anwendung (21) oder die Anwendungsschicht-Funktionalität (21) und/oder eine Anzeige der Notwendigkeit, die mindestens eine anwendungsspezifische Identifikationsinformation (260) zur Markierung oder Kennzeichnung der Uplink- und Downlink-Datenpakete in Bezug auf die Anwendung (21) oder die Anwendungsschicht-Funktionalität (21) zu verwenden, umfasst.

9. Verfahren nach einem der vorhergehenden Ansprüche, wobei die Datenübertragungssitzung zusätzlich Daten in separate QoS-Flüsse trennt, von denen jeder eine spezifische Dienstqualität anzeigt, die auf den Verkehr anzuwenden ist, wobei Daten eines gegebenen Anwendungsflusses einem oder mehreren QoS-Flüssen zugeordnet werden.

10. Benutzergerät (20) zum Betrieb innerhalb oder als Teil eines Telekommunikationsnetzes (100), wobei der Betrieb des Benutzergeräts (20) den Betrieb einer Anwendung (21) oder einer Anwendungsschicht-Funktionalität (21) des Benutzergeräts (20) umfasst, wobei das Benutzergerät (20) eine Sitzungszugriffs-Kontrollfunktion oder -funktionalität (26) und eine Anwendungsautorisierungsfunktion oder -funktionalität (25) umfasst, wobei das Benutzergerät (20) so konfiguriert ist, dass es mit dem Telekommunikationsnetz (100) oder als Teil davon und mit einem Zugangsnetz (110) und einem Kernnetz (120) davon kommuniziert, wobei das Kernnetz (120) dem Benutzergerät (20) Datenkonnektivität zu einem Datennetz (130) bereitstellt, wobei der Betrieb der Anwendung (21) oder der Anwendungsschicht-Funktionalität (21) des Benutzergeräts (20) erfordert, dass mindestens eine Datenübertragungssitzung (210) zwischen dem Benutzergerät (20) und dem Kernnetz (120) eingerichtet wird, so dass Downlink-Datenpakete vom Kernnetz (120) oder über das Kernnetz (120) an das Benutzergerät (20) übertragen werden können und Uplink-Datenpakete vom Benutzergerät (20) zum Kernnetz (120) oder über das Kernnetz (120) übertragen werden können, wobei das Benutzergerät (20) so konfiguriert ist, dass Downlink-Datenpakete, die auf die Anwendung (21) oder die Anwendungsschicht-Funktionalität (21) gerichtet oder mit dieser in Zusammenhang stehen, einen anwendungsspezifischen Downlink-Anwendungsfluss bilden können, und Uplink-Datenpakete, die von der Anwendung (21) oder der Anwendungsschicht-Funktionalität (21) stammen, einen anwendungsspezifischen Uplink-Anwendungsfluss bilden können, und damit das Kernnetz (120) eine Anwendungsfluss-Klassifizierung verwenden kann, um unterschiedliche Priorisierung oder Verkehrsrichtlinien auf den Verkehr von gegebenen Anwendungen (21) oder Anwendungsschicht-Funktionalitäten (21) anzuwenden oder um unterschiedliche Abrechnungsregeln auf verschiedene Anwendungen (21) oder Anwendungsschicht-Funktionalitäten (21) anzuwenden, wobei das Benutzergerät (20) so konfiguriert ist, dass: -- der Anwendung (21) oder der Anwendungsschicht-Funktionalität (21) mindestens eine anwendungsspezifische Identifikationsinformation (260) zugewiesen wird,
-- die Anwendung (21) oder die Anwendungsschicht-Funktionalität (21) unter Verwendung der mindestens einen Datenübertragungssitzung (210) betrieben wird, wobei die Anwendungsautorisierungsfunktion oder -funktionalität (25) die Anwendung (21) oder die Anwendungsschicht-Funktionalität (21) zum Zugriff auf die mindestens eine Datenübertragungssitzung (210) autorisiert, wobei die Sitzungszugriffs-Kontrollfunktion oder -funktionalität (26) zusätzlich die Entscheidung der Anwendungsautorisierungsfunktion oder -funktionalität (25) überwacht oder ausführt, insbesondere die Entscheidung bezüglich der Autorisierung der Anwendung (21) oder der Anwendungsschicht-Funktionalität (21) zum Zugriff auf die mindestens eine Datenübertragungssitzung (210), wobei die Datenübertragungssitzung (210) sowohl die Downlink-Datenpakete als auch die Uplink-Datenpakete und mindestens einen Teil der mindestens einen anwendungsspezifischen Identifikationsinformation (260) transportiert, wobei die Sitzungszugriffs-Kontrollfunktion oder -funktionalität (26) veranlasst, dass die Downlink-Datenpakete und die Uplink-Datenpakete unter Verwendung mindestens eines Teils der mindestens einen anwendungsspezifischen Identifikationsinformation (260) markiert oder gekennzeichnet werden, wobei die Sitzungszugriffs-Kontrollfunktion oder -funktionalität (26) des Benutzergeräts (20) so konfiguriert ist, dass sie die Uplink-Datenpakete mittels der mindestens einen anwendungsspezifischen Identifikationsinformation kennzeichnet oder markiert, wobei das Benutzergerät (20) ferner so konfiguriert ist, dass:
-- anwendungsspezifische Identifikationsinformation in den Uplink-Datenpaketen innerhalb der Datenübertragungssitzung (210) durch das Benutzergerät (20) und das Kernnetz (120) enthalten ist, und/oder
-- Endmarkierungspakete, die mindestens eine anwendungsspezifische Identifikationsinformation enthalten, in der Datenübertragungssitzung (210) durch das Benutzergerät (20) eingeführt werden, wobei die Endmarkierungspakete anzeigen, dass nachfolgende Pakete zu einem bestimmten Anwendungs- oder Anwendungsgruppenfluss gehören.

11. Telekommunikationsnetz (100) zum Betreiben eines Benutzergeräts (20) innerhalb oder als Teil des Telekommunikationsnetzes (100), wobei der Betrieb des Benutzergeräts (20) den Betrieb einer Anwendung (21) oder einer Anwendungsschicht-Funktionalität (21) des Benutzergeräts (20) umfasst, wobei das Telekommunikationsnetz (100) ein Benutzergerät (20) umfasst und wobei das Benutzergerät (20) eine Sitzungszugriffs-Kontrollfunktion oder - funktionalität (26) und eine Anwendungsautorisierungsfunktion oder -funktionalität (25) umfasst, wobei das Telekommunikationsnetz (100) ein Zugangsnetz (110) und ein Kernnetz (120) umfasst oder diesem zugeordnet ist, wobei das Kernnetz (120) dem Benutzergerät (20) Datenkonnektivität zu einem Datennetz (130) bereitstellt, wobei der Betrieb der Anwendung (21) oder der Anwendungsschicht-Funktionalität (21) des Benutzergeräts (20) erfordert, dass mindestens eine Datenübertragungssitzung (210) zwischen dem Benutzergerät (20) und dem Kernnetz (120) eingerichtet wird, so dass Downlink-Datenpakete vom Kernnetz (120) oder über das Kernnetz (120) an das Benutzergerät (20) übertragen werden können und Uplink-Datenpakete vom Benutzergerät (20) zum Kernnetz (120) oder über das Kernnetz (120) übertragen werden können, wobei das Telekommunikationsnetz (100) so konfiguriert ist, dass Downlink-Datenpakete, die auf die Anwendung (21) oder die Anwendungsschicht-Funktionalität (21) gerichtet oder mit dieser in Zusammenhang stehen, einen anwendungsspezifischen Downlink-Anwendungsfluss bilden können, und Uplink-Datenpakete, die von der Anwendung (21) oder der Anwendungsschicht-Funktionalität (21) stammen, einen anwendungsspezifischen Uplink-Anwendungsfluss bilden können, wobei das Telekommunikationsnetz (100) so konfiguriert ist, dass:
-- der Anwendung (21) oder der Anwendungsschicht-Funktionalität (21) mindestens eine anwendungsspezifische Identifikationsinformation (260) zugewiesen wird,
-- die Anwendung (21) oder die Anwendungsschicht-Funktionalität (21) unter Verwendung der mindestens einen Datenübertragungssitzung (210) betrieben wird, wobei die Anwendungsautorisierungsfunktion oder -funktionalität (25) die Anwendung (21) oder die Anwendungsschicht-Funktionalität (21) zum Zugriff auf die mindestens eine Datenübertragungssitzung (210) autorisiert, wobei die Sitzungszugriffs-Kontrollfunktion oder -funktionalität (26) zusätzlich die Entscheidung der Anwendungsautorisierungsfunktion oder -funktionalität (25) überwacht oder ausführt, insbesondere die Entscheidung bezüglich der Autorisierung der Anwendung (21) oder der Anwendungsschicht-Funktionalität (21) zum Zugriff auf die mindestens eine Datenübertragungssitzung (210), wobei die Datenübertragungssitzung (210) sowohl die Downlink-Datenpakete als auch die Uplink-Datenpakete und mindestens einen Teil der mindestens einen anwendungsspezifischen Identifikationsinformation (260) transportiert, wobei die Sitzungszugriffs-Kontrollfunktion oder -funktionalität (26) veranlasst, dass die Downlink-Datenpakete und die Uplink-Datenpakete unter Verwendung mindestens eines Teils der mindestens einen anwendungsspezifischen Identifikationsinformation (260) markiert oder gekennzeichnet werden, wobei die Sitzungsankerfunktionalität des Kernnetzes (120) so konfiguriert ist, dass sie die Downlink-Datenpakete unter Verwendung mindestens eines Teils der mindestens einen anwendungsspezifischen Identifikationsinformation (260) kennzeichnet oder markiert, wobei das Kernnetz (120) so konfiguriert ist, dass:
-- anwendungsspezifische Identifikationsinformation in den Downlink-Datenpaketen innerhalb der Datenübertragungssitzung (210) durch das Kernnetz (120) enthalten ist, und/oder
-- Endmarkierungspakete, die mindestens eine anwendungsspezifische Identifikationsinformation enthalten, in der Datenübertragungssitzung (210) durch das Kernnetz (120) eingeführt werden, wobei die Endmarkierungspakete anzeigen, dass nachfolgende Pakete zu einem bestimmten Anwendungs- oder Anwendungsgruppenfluss gehören, wobei das Kernnetz (120) eine Anwendungsfluss-Klassifizierung verwendet, um unterschiedliche Priorisierung oder Verkehrsrichtlinien auf den Verkehr von gegebenen Anwendungen (21) oder Anwendungsschicht-Funktionalitäten (21) anzuwenden oder um unterschiedliche Abrechnungsregeln auf verschiedene Anwendungen (21) oder Anwendungsschicht-Funktionalitäten (21) anzuwenden.

12. Programm, das einen computerlesbaren Programmcode oder ein computerlesbares Medium umfasst, das Anweisungen umfasst, die, wenn sie auf einem Computer und/oder auf einem Benutzergerät (20) und/oder auf einer Sitzungszugriffs-Kontrollfunktion oder - funktionalität (26) und/oder auf einem Netzwerkknoten eines Telekommunikationsnetzes (100) ausgeführt werden, oder teilweise auf einem Benutzergerät (20) und/oder teilweise auf einer Sitzungszugriffs-Kontrollfunktion oder -funktionalität (26) und/oder teilweise auf einem Netzwerkknoten eines Telekommunikationsnetzes (100) ausgeführt werden, den Computer und/oder das Benutzergerät (20) und/oder die Sitzungszugriffs-Kontrollfunktion oder - funktionalität (26) und/oder den Netzwerkknoten des Telekommunikationsnetzes (100) dazu veranlassen, ein Verfahren nach einem der Ansprüche 1 bis 9 durchzuführen.

## Revendications

1. Procédé pour faire fonctionner un équipement utilisateur (20) au sein ou en tant que partie d'un réseau de télécommunications (100), dans lequel le fonctionnement de l'équipement utilisateur (20) implique le fonctionnement d'une application (21) ou d'une fonctionnalité de couche application (21) de l'équipement utilisateur (20), dans lequel l'équipement utilisateur (20) comprend une fonction de contrôle d'accès aux sessions ou une fonctionnalité de contrôle d'accès aux sessions (26) et une fonction d'autorisation d'application ou une fonctionnalité d'autorisation d'application (25), dans lequel le réseau de télécommunications (100) comprend ou est associé ou affecté à un réseau d'accès (110) et à un réseau central (120), dans lequel le réseau central (120) fournit à l'équipement utilisateur (20) une connectivité de données vers un réseau de données (130), dans lequel le fonctionnement de l'application (21) ou de la fonctionnalité de couche application (21) de l'équipement utilisateur (20) nécessite qu'au moins une session de transmission de données (210) soit établie entre l'équipement utilisateur (20) et le réseau central (120) de sorte que des paquets de données en liaison descendante puissent être transmis depuis ou via le réseau central (120) vers l'équipement utilisateur (20) et que des paquets de données en liaison montante puissent être transmis depuis l'équipement utilisateur (20) vers ou via le réseau central (120), dans lequel, afin que des paquets de données en liaison descendante, dirigés vers ou liés à l'application (21) ou à la fonctionnalité de couche application (21), puissent former un flux d'application en liaison descendante spécifique à l'application, et que des paquets de données en liaison montante, provenant de l'application (21) ou de la fonctionnalité de couche application (21), puissent former un flux d'application en liaison montante spécifique à l'application, le procédé comprend les étapes suivantes :
-- dans une première étape, au moins une information d'identification spécifique à l'application (260) est affectée à l'application (21) ou à la fonctionnalité de couche application (21),
-- dans une deuxième étape, l'application (21) ou la fonctionnalité de couche application (21) est exploitée en utilisant l'au moins une session de transmission de données (210), dans laquelle la fonction d'autorisation d'application ou la fonctionnalité d'autorisation d'application (25) autorise l'application (21) ou la fonctionnalité de couche application (21) à accéder à l'au moins une session de transmission de données (210), dans laquelle la fonction de contrôle d'accès aux sessions ou la fonctionnalité de contrôle d'accès aux sessions (26) contrôle ou exécute en outre la décision de la fonction d'autorisation d'application ou de la fonctionnalité d'autorisation d'application (25), en particulier la décision concernant l'autorisation de l'application (21) ou de la fonctionnalité de couche application (21) à accéder à l'au moins une session de transmission de données (210), dans laquelle la session de transmission de données (210) transporte à la fois les paquets de données en liaison descendante et les paquets de données en liaison montante et au moins une partie de l'au moins une information d'identification spécifique à l'application (260), dans laquelle la fonction de contrôle d'accès aux sessions ou la fonctionnalité de contrôle d'accès aux sessions (26) déclenche le marquage ou l'étiquetage des paquets de données en liaison descendante et des paquets de données en liaison montante en utilisant au moins une partie de l'au moins une information d'identification spécifique à l'application (260), dans laquelle les paquets de données en liaison descendante sont étiquetés ou marqués par une fonctionnalité d'ancrage de session du réseau central (120) et les paquets de données en liaison montante sont étiquetés ou marqués par la fonction de contrôle d'accès aux sessions ou la fonctionnalité de contrôle d'accès aux sessions (26) de l'équipement utilisateur (20), dans lequel
-- une information d'identification spécifique à l'application est incluse dans les paquets de données en liaison descendante et en liaison montante au sein de la session de transmission de données (210) par l'équipement utilisateur (20) et le réseau central (120), et/ou
-- des paquets de marqueur de fin, contenant au moins une information d'identification spécifique à l'application, sont introduits dans la session de transmission de données (210) par l'équipement utilisateur (20) et le réseau central (120), dans lequel les paquets de marqueur de fin indiquent que les paquets suivants appartiennent à un flux d'application ou de groupe d'applications spécifique, dans lequel le réseau central (120) utilise une classification de flux d'application pour appliquer différentes priorisation ou politiques de trafic au trafic provenant d'applications (21) ou de fonctionnalités de couche application (21) données, ou pour appliquer différentes règles de facturation à différentes applications (21) ou fonctionnalités de couche application (21).

2. Procédé selon l'une quelconque des revendications précédentes, dans lequel le fonctionnement de l'équipement utilisateur (20) implique en outre le fonctionnement d'une autre application ou d'une autre fonctionnalité de couche application de l'équipement utilisateur (20), dans lequel le fonctionnement de l'autre application ou de l'autre fonctionnalité de couche application de l'équipement utilisateur (20) utilise également l'au moins une session de transmission de données (210) établie entre l'équipement utilisateur (20) et le réseau central (120), dans lequel, afin que l'autre application ou l'autre fonctionnalité de couche application puisse échanger des données utiles avec ou être connectée au réseau central (120) et/ou au réseau de données (130), en utilisant l'au moins une session de transmission de données (210), au moins une information d'identification supplémentaire spécifique à l'application est affectée à l'autre application ou à l'autre fonctionnalité de couche application, et l'autre application ou l'autre fonctionnalité de couche application est exploitée en utilisant l'au moins une session de transmission de données (210), dans lequel à la fois les paquets de données en liaison descendante supplémentaires respectifs et les paquets de données en liaison montante supplémentaires respectifs comprennent au moins une partie de l'au moins une information d'identification supplémentaire spécifique à l'application.

3. Procédé selon l'une quelconque des revendications précédentes, dans lequel l'au moins une information d'identification spécifique à l'application (260) se rapporte à deux ou plusieurs applications (21) ou fonctionnalités de couche application (21), en particulier à un groupe d'applications (21) ou de fonctionnalités de couche application (21).

4. Procédé selon l'une quelconque des revendications précédentes, dans lequel l'au moins une information d'identification spécifique à l'application se rapporte ou est utilisée en ce qui concerne plus d'une session de transmission de données (210).

5. Procédé selon l'une quelconque des revendications précédentes, dans lequel, dans le cadre de la première étape, l'équipement utilisateur (20), en particulier la fonction de contrôle d'accès aux sessions ou la fonctionnalité de contrôle d'accès aux sessions (26) et/ou la fonction d'autorisation d'application ou la fonctionnalité d'autorisation d'application (25), interroge et/ou récupère, à partir du réseau central (120), en particulier à partir d'une fonction de gestion de session du réseau central (120), l'au moins une information d'identification spécifique à l'application (260), et communique en particulier l'au moins une information d'identification spécifique à l'application (260) avec le réseau central (120), en particulier la fonctionnalité d'ancrage de session du réseau central (120).

6. Procédé selon l'une quelconque des revendications précédentes, dans lequel, afin de marquer ou d'étiqueter les paquets de données en liaison montante, une première partie de l'au moins une information d'identification spécifique à l'application (260) est utilisée, et dans lequel, afin de marquer ou d'étiqueter les paquets de données en liaison descendante, une deuxième partie de l'au moins une information d'identification spécifique à l'application (260) est utilisée.

7. Procédé selon l'une quelconque des revendications précédentes, dans lequel l'au moins une session de transmission de données (210) est une session PDU (210), une session d'unité de données de protocole, et/ou dans lequel la fonctionnalité d'ancrage de session est un point d'ancrage de session PDU, en particulier la fonction de plan utilisateur du réseau central (120).

8. Procédé selon l'une quelconque des revendications précédentes, dans lequel, dans une troisième étape avant la première étape, après que la session PDU (210) a été établie ou générée, l'équipement utilisateur (20) échange des messages de modification de session PDU avec le réseau central (120), dans lequel en particulier l'établissement ou la génération ou la modification ultérieure de la session PDU (210) comprend une indication d'une capacité liée à l'utilisation de l'au moins une information d'identification spécifique à l'application (260) pour marquer ou étiqueter les paquets de données en liaison montante et en liaison descendante liés à l'application (21) ou à la fonctionnalité de couche application (21) et/ou une indication de la nécessité d'utiliser l'au moins une information d'identification spécifique à l'application (260) pour marquer ou étiqueter les paquets de données en liaison montante et en liaison descendante liés à l'application (21) ou à la fonctionnalité de couche application (21).

9. Procédé selon l'une quelconque des revendications précédentes, dans lequel la session de transmission de données sépare en outre les données en flux QoS séparés, chacun indiquant une qualité de service spécifique à appliquer au trafic, dans lequel les données d'un flux d'application donné sont associées à un ou plusieurs flux QoS.

10. Équipement utilisateur (20) destiné à être exploité au sein ou en tant que partie d'un réseau de télécommunications (100), dans lequel le fonctionnement de l'équipement utilisateur (20) implique le fonctionnement d'une application (21) ou d'une fonctionnalité de couche application (21) de l'équipement utilisateur (20), dans lequel l'équipement utilisateur (20) comprend une fonction de contrôle d'accès aux sessions ou une fonctionnalité de contrôle d'accès aux sessions (26) et une fonction d'autorisation d'application ou une fonctionnalité d'autorisation d'application (25), dans lequel l'équipement utilisateur (20) est configuré pour communiquer avec ou en tant que partie du réseau de télécommunications (100) et avec un réseau d'accès (110) et un réseau central (120) de celui-ci, dans lequel le réseau central (120) fournit à l'équipement utilisateur (20) une connectivité de données vers un réseau de données (130), dans lequel le fonctionnement de l'application (21) ou de la fonctionnalité de couche application (21) de l'équipement utilisateur (20) nécessite qu'au moins une session de transmission de données (210) soit établie entre l'équipement utilisateur (20) et le réseau central (120) de sorte que des paquets de données en liaison descendante puissent être transmis depuis ou via le réseau central (120) vers l'équipement utilisateur (20) et que des paquets de données en liaison montante puissent être transmis depuis l'équipement utilisateur (20) vers ou via le réseau central (120), dans lequel, afin que des paquets de données en liaison descendante, dirigés vers ou liés à l'application (21) ou à la fonctionnalité de couche application (21), puissent former un flux d'application en liaison descendante spécifique à l'application, et que des paquets de données en liaison montante, provenant de l'application (21) ou de la fonctionnalité de couche application (21), puissent former un flux d'application en liaison montante spécifique à l'application, et afin que le réseau central (120) puisse utiliser une classification de flux d'application pour appliquer différentes priorisation ou politiques de trafic au trafic provenant d'applications (21) ou de fonctionnalités de couche application (21) données, ou pour appliquer différentes règles de facturation à différentes applications (21) ou fonctionnalités de couche application (21), l'équipement utilisateur (20) est configuré de sorte que :
-- au moins une information d'identification spécifique à l'application (260) est affectée à l'application (21) ou à la fonctionnalité de couche application (21),
**--** l'application (21) ou la fonctionnalité de couche application (21) est exploitée en utilisant l'au moins une session de transmission de données (210), dans laquelle la fonction d'autorisation d'application ou la fonctionnalité d'autorisation d'application (25) autorise l'application (21) ou la fonctionnalité de couche application (21) à accéder à l'au moins une session de transmission de données (210), dans laquelle la fonction de contrôle d'accès aux sessions ou la fonctionnalité de contrôle d'accès aux sessions (26) contrôle ou exécute en outre la décision de la fonction d'autorisation d'application ou de la fonctionnalité d'autorisation d'application (25), en particulier la décision concernant l'autorisation de l'application (21) ou de la fonctionnalité de couche application (21) à accéder à l'au moins une session de transmission de données (210), dans laquelle la session de transmission de données (210) transporte à la fois les paquets de données en liaison descendante et les paquets de données en liaison montante et au moins une partie de l'au moins une information d'identification spécifique à l'application (260), dans laquelle la fonction de contrôle d'accès aux sessions ou la fonctionnalité de contrôle d'accès aux sessions (26) déclenche le marquage ou l'étiquetage des paquets de données en liaison descendante et des paquets de données en liaison montante en utilisant au moins une partie de l'au moins une information d'identification spécifique à l'application (260), dans laquelle la fonction de contrôle d'accès aux sessions ou la fonctionnalité de contrôle d'accès aux sessions (26) de l'équipement utilisateur (20) est configurée pour étiqueter ou marquer les paquets de données en liaison montante au moyen de l'au moins une information d'identification spécifique à l'application, dans lequel l'équipement utilisateur (20) est en outre configuré de sorte que :
-- une information d'identification spécifique à l'application est incluse dans les paquets de données en liaison montante au sein de la session de transmission de données (210) par l'équipement utilisateur (20) et le réseau central (120), et/ou
-- des paquets de marqueur de fin, contenant au moins une information d'identification spécifique à l'application, sont introduits dans la session de transmission de données (210) par l'équipement utilisateur (20), dans lequel les paquets de marqueur de fin indiquent que les paquets suivants appartiennent à un flux d'application ou de groupe d'applications spécifique.

11. Réseau de télécommunications (100) pour faire fonctionner un équipement utilisateur (20) au sein ou en tant que partie du réseau de télécommunications (100), dans lequel le fonctionnement de l'équipement utilisateur (20) implique le fonctionnement d'une application (21) ou d'une fonctionnalité de couche application (21) de l'équipement utilisateur (20), dans lequel le réseau de télécommunications (100) comprend un équipement utilisateur (20) et dans lequel l'équipement utilisateur (20) comprend une fonction de contrôle d'accès aux sessions ou une fonctionnalité de contrôle d'accès aux sessions (26) et une fonction d'autorisation d'application ou une fonctionnalité d'autorisation d'application (25), dans lequel le réseau de télécommunications (100) comprend ou est associé ou affecté à un réseau d'accès (110) et à un réseau central (120), dans lequel le réseau central (120) fournit à l'équipement utilisateur (20) une connectivité de données vers un réseau de données (130), dans lequel le fonctionnement de l'application (21) ou de la fonctionnalité de couche application (21) de l'équipement utilisateur (20) nécessite qu'au moins une session de transmission de données (210) soit établie entre l'équipement utilisateur (20) et le réseau central (120) de sorte que des paquets de données en liaison descendante puissent être transmis depuis ou via le réseau central (120) vers l'équipement utilisateur (20) et que des paquets de données en liaison montante puissent être transmis depuis l'équipement utilisateur (20) vers ou via le réseau central (120), dans lequel, afin que des paquets de données en liaison descendante, dirigés vers ou liés à l'application (21) ou à la fonctionnalité de couche application (21), puissent former un flux d'application en liaison descendante spécifique à l'application, et que des paquets de données en liaison montante, provenant de l'application (21) ou de la fonctionnalité de couche application (21), puissent former un flux d'application en liaison montante spécifique à l'application, le réseau de télécommunications (100) est configuré de sorte que :
-- au moins une information d'identification spécifique à l'application (260) est affectée à l'application (21) ou à la fonctionnalité de couche application (21),
-- l'application (21) ou la fonctionnalité de couche application (21) est exploitée en utilisant l'au moins une session de transmission de données (210), dans laquelle la fonction d'autorisation d'application ou la fonctionnalité d'autorisation d'application (25) autorise l'application (21) ou la fonctionnalité de couche application (21) à accéder à l'au moins une session de transmission de données (210), dans laquelle la fonction de contrôle d'accès aux sessions ou la fonctionnalité de contrôle d'accès aux sessions (26) contrôle ou exécute en outre la décision de la fonction d'autorisation d'application ou de la fonctionnalité d'autorisation d'application (25), en particulier la décision concernant l'autorisation de l'application (21) ou de la fonctionnalité de couche application (21) à accéder à l'au moins une session de transmission de données (210), dans laquelle la session de transmission de données (210) transporte à la fois les paquets de données en liaison descendante et les paquets de données en liaison montante et au moins une partie de l'au moins une information d'identification spécifique à l'application (260), dans laquelle la fonction de contrôle d'accès aux sessions ou la fonctionnalité de contrôle d'accès aux sessions (26) déclenche le marquage ou l'étiquetage des paquets de données en liaison descendante et des paquets de données en liaison montante en utilisant au moins une partie de l'au moins une information d'identification spécifique à l'application (260), dans laquelle la fonctionnalité d'ancrage de session du réseau central (120) est configurée pour étiqueter ou marquer les paquets de données en liaison descendante en utilisant au moins une partie de l'au moins une information d'identification spécifique à l'application (260), dans lequel le réseau central (120) est configuré de sorte que :
-- une information d'identification spécifique à l'application est incluse dans les paquets de données en liaison descendante au sein de la session de transmission de données (210) par le réseau central (120), et/ou
-- des paquets de marqueur de fin, contenant au moins une information d'identification spécifique à l'application, sont introduits dans la session de transmission de données (210) par le réseau central (120), dans lequel les paquets de marqueur de fin indiquent que les paquets suivants appartiennent à un flux d'application ou de groupe d'applications spécifique, dans lequel le réseau central (120) utilise une classification de flux d'application pour appliquer différentes priorisation ou politiques de trafic au trafic provenant d'applications (21) ou de fonctionnalités de couche application (21) données, ou pour appliquer différentes règles de facturation à différentes applications (21) ou fonctionnalités de couche application (21).

12. Programme comprenant un code de programme lisible par ordinateur ou un support lisible par ordinateur comprenant des instructions qui, lorsqu'elles sont exécutées sur un ordinateur et/ou sur un équipement utilisateur (20) et/ou sur une fonction de contrôle d'accès aux sessions ou une fonctionnalité de contrôle d'accès aux sessions (26) et/ou sur un nœud de réseau d'un réseau de télécommunications (100), ou en partie sur un équipement utilisateur (20) et/ou en partie sur une fonction de contrôle d'accès aux sessions ou une fonctionnalité de contrôle d'accès aux sessions (26) et/ou en partie sur un nœud de réseau d'un réseau de télécommunications (100), amènent l'ordinateur et/ou l'équipement utilisateur (20) et/ou la fonction de contrôle d'accès aux sessions ou la fonctionnalité de contrôle d'accès aux sessions (26) et/ou le nœud de réseau du réseau de télécommunications (100) à effectuer un procédé selon l'une quelconque des revendications 1 à 9.
